# EUROPÄISCHE PATENTANMELDUNG

(11) **EP 4 376 404 A2**
(43) Veröffentlichungstag der Anmeldung: **29.05.2024**
(21) Anmeldenummer: 24166960.5
(22) Anmeldetag: 11.04.2018
(51) Int. Cl.: H04N 13/271

(54) **VORRICHTUNG ZUR ABBILDUNG VON TEILGESICHTSFELDERN, MULTIAPERTURABBILDUNGSVORRICHTUNG UND VERFAHREN ZUM BEREITSTELLEN DERSELBEN**

(30) Priorität: 13.04.2017 DE 102017206442
(62) Teilanmeldung aus: 18724780.4
(71) Anmelder: Fraunhofer-Gesellschaft zur Förderung der angewandten Forschung e.V., 80686 München (DE)
(72) Erfinder: DUPARRÉ, Jacques, 07745 Jena (DE); OBERDÖRSTER, Alexander, 07749 Jena (DE); WIPPERMANN, Frank, 98617 Meiningen (DE); BRÜCKNER, Andreas, 07743 Jena (DE)
(74) Vertreter: König, Andreas Rudolf

(57) **Zusammenfassung**

Eine Vorrichtung umfasst einen Bildsensor und ein Array von optischen Kanälen, wobei jeder optische Kanal eine Optik zur Abbildung eines Teilgesichtsfelds eines Gesamtgesichtsfelds auf einem Bildsensorbereich des Bildsensors umfasst. Ein erster optischer Kanal des Arrays ist ausgebildet, um ein erstes Teilgesichtsfeld des Gesamtgesichtsfelds abzubilden. Ein zweiter optischer Kanal des Arrays ist ausgebildet, um ein zweites Teilgesichtsfeld des Gesamtgesichtsfelds abzubilden. Die Vorrichtung umfasst eine Berechnungseinheit, die ausgebildet ist, um Bildinformationen des ersten und zweiten Teilgesichtsfelds basierend auf den abgebildeten Teilgesichtsfeldern zu erhalten, und um eine Bildinformation des Gesamtgesichtsfelds zu erhalten, und um die Bildinformation der Teilgesichtsfelder mit der Bildinformation des Gesamtgesichtsfelds zu kombinieren, um eine kombinierte Bildinformation des Gesamtgesichtsfelds zu erzeugen.

## Beschreibung

Die vorliegende Erfindung bezieht sich auf eine Vorrichtung zum mehrkanaligen Erfassen eines Gesamtgesichtsfelds, auf eine Ergänzungsvorrichtung zum Ergänzen einer bestehenden Kamera, auf eine Multiaperturabbildungsvorrichtung und auf Verfahren zum Herstellen einer hierin beschriebenen Vorrichtung und Multiaperturabbildungsvorrichtung. Die vorliegende Erfindung bezieht sich ferner auf eine symmetrische Kanalanordnung und unterschiedliche Gesichtsfelder.

Konventionelle Kameras besitzen einen Abbildungskanal, der das gesamte Objektfeld abbildet. Andere Kameras umfassen mehrere Abbildungskanäle, um das Gesamtgesichtsfeld durch mehrere Teilgesichtsfelder abzubilden. Zum korrekten Stitching (Zusammennähen bzw. Zusammenfügen) von Bildern für ein Gesamtgesichtsfeld mit Objekten mit unterschiedlichen Abständen von der Kamera kann es erforderlich sein, die Berechnung einer Tiefenkarte des aufgenommenen Gesamtgesichtsfelds durchzuführen. Wird hierfür eine stereoskope Erfassung genutzt, so kann es erforderlich sein, eine Perspektive der (künstlichen, mittleren) Referenzkamera synthetisch zu erzeugen. Dies kann zu Ockultations- oder Occlusionsproblemen führen, da manche Objekte entlang einer Blickrichtung verdeckt sein können. Für die Ausgabe einer Vorschau (Preview) und/oder eines Videos kann eine Bildverarbeitung, etwa mittels Stitching, durchgeführt werden, was Berechnungsaufwand erfordert.

Wünschenswert wäre demnach ein Konzept zum Bereitstellen hochqualitativer Bilder, die die oben genannten Nachteile nicht aufweisen.

Die Aufgabe der vorliegenden Erfindung besteht deshalb darin, hochqualitative Bilder des Gesamtgesichtsfelds bereitzustellen und gleichzeitig eine Einflussnahme auf die Bildaufnahme mit geringem Vorverarbeitungsaufwand bereitzustellen.

Diese Aufgabe wird durch den Gegenstand der unabhängigen Patentansprüche gelöst.

Eine Erkenntnis der vorliegenden Erfindung besteht darin, erkannt zu haben, dass obige Aufgabe dadurch gelöst werden kann, dass Bildinformation, etwa eine Auflösung eines Gesamtgesichtsfelds durch Kombination derselben mit Bildinformation von Teilgesichtsfeldern desselben Gesamtgesichtsfelds erhöht werden kann, hierbei die Bildinformation des Gesamtgesichtsfelds jedoch bereits als Grobinformation vorliegt und verwendet werden kann und durch die Verwendung der Gesamtbildinformation das Auftreten von Okkultations-Artefakten vermieden werden kann.

Gemäß einem Ausführungsbeispiel umfasst eine Vorrichtung einen Bildsensor und ein Array von optischen Kanälen. Jeder optische Kanal umfasst eine Optik zur Abbildung eines Teilgesichtsfelds eines Gesamtgesichtsfelds auf einen Bildsensorbereich des Bildsensors. Ein erster optischer Kanal des Arrays ist ausgebildet, um ein erstes Teilgesichtsfeld des Gesamtgesichtsfelds abzubilden und ein zweiter optischer Kanal des Arrays ist ausgebildet, um ein zweites Teilgesichtsfeld des Gesamtgesichtsfelds abzubilden. Die Vorrichtung umfasst eine Berechnungseinheit, die ausgebildet ist, um Bildinformationen des ersten und zweiten Teilgesichtsfelds basierend auf den abgebildeten Teilgesichtsfeldern zu erhalten. Die Berechnungseinheit ist ferner ausgebildet, um eine Bildinformation des Gesamtgesichtsfelds zu erhalten, etwa von einer weiteren Vorrichtung, und um die Bildinformationen der Teilgesichtsfelder mit der Bildinformation des Gesamtgesichtsfelds zu kombinieren, um eine kombinierte Bildinformation des Gesamtgesichtsfelds zu erzeugen. Durch die Kombination der Bildinformationen der Teilgesichtsfelder und des Gesamtgesichtsfelds wird eine hochqualitative kombinierte Bildinformation erhalten, da ein hohes Maß an Bildinformation vorliegt. Ferner ermöglicht die Bildinformation des Gesamtgesichtsfelds eine Einflussnahme mit geringem Vorverarbeitungsaufwand, da sie einem Benutzer angezeigt werden kann, ohne dass Teilbilder gestitcht werden müssen.

Gemäß einem weiteren Ausführungsbeispiel umfasst eine Ergänzungsvorrichtung eine derartige Vorrichtung und ist konfiguriert, um mit einer Kamera gekoppelt zu werden, um von dieser die Bildinformation des Gesamtgesichtsfelds zu erhalten. Dies ermöglicht es, bereits bestehende gegebenenfalls Mono-Kameras durch die zusätzliche Abbildung der Teilgesichtsfelder zu ergänzen, so dass eine hochqualitative kombinierte Bildinformation des Gesamtgesichtsfelds erhalten wird. Gleichzeitig kann das Bild der Kamera genutzt werden, um eine Einflussnahme auf die Bildverarbeitung auszuführen, da die Information bezüglich des Gesamtgesichtsfelds bereits zumindest grob vorliegt.

Gemäß einem weiteren Ausführungsbeispiel umfasst eine Multiaperturabbildungsvorrichtung einen Bildsensor, ein Array von optischen Kanälen, wobei jeder optische Kanal eine Optik zur Abbildung zumindest eines Teilgesichtsfelds eines Gesamtgesichtsfelds auf einem Bildsensorbereich des Bildsensors umfasst. Ein erster optischer Kanal des Arrays ist ausgebildet, um ein erstes Teilgesichtsfeld des Gesamtgesichtsfelds abzubilden, wobei ein zweiter optischer Kanal des Arrays ausgebildet ist, um ein zweites Teilgesichtsfeld des Gesamtgesichtsfelds abzubilden, und wobei ein dritter optischer Kanal ausgebildet ist, um das Gesamtgesichtsfeld vollständig abzubilden. Dies ermöglicht den Erhalt sowohl einer Bildinformation bezüglich des Gesamtgesichtsfelds als auch zusätzlich den Erhalt von Bildinformationen bezüglich der Teilgesichtsfelder desselben Gesamtgesichtsfelds, so dass Bildbereiche der Teilgesichtsfelder mehrfach abgetastet werden, was beispielsweise eine stereoskop erzeugte Tiefenkarte und damit hochqualitative Bildgenerierung ermöglicht. Gleichzeitig liegt ebenfalls zusätzlich zu den Informationen bezüglich der Teilgesichtsfelder die Information bezüglich des Gesamtgesichtsfelds vor, was die Einflussnahme des Benutzers ohne vorherige Bildbearbeitung ermöglicht.

Weitere Ausführungsbeispiele beziehen sich auf ein Verfahren zum Herstellen einer Vorrichtung zum mehrkanaligen Erfassen eines Gesamtgesichtsfelds und auf ein Verfahren zum Bereitstellen einer Multiaperturabbildungsvorrichtung.

Die genannten Ausführungsbeispiele ermöglichen die Vermeidung oder Verringerung der Okkultation, da die Hauptblickrichtung der Abbildung des Gesamtgesichtsfelds und der kombinierten Bildinformation des Gesamtgesichtsfelds unverändert ist und durch die Abbildungen der Teilgesichtsfelder ergänzt wird.

Weitere vorteilhafte Ausführungsformen sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische perspektivische Ansicht einer Multiaperturabbildungsvorrichtung gemäß einem Ausführungsbeispiel;
- Fig. 2a-c: schematische Darstellungen von Anordnungen von Teilgesichtsfeldern in einem Gesamtgesichtsfeld , gemäß einem Ausführungsbeispiel;

- Fig. 3: eine schematische perspektivische Darstellung einer Multiaperturabbildungsvorrichtung, die eine Berechnungseinheit aufweist, gemäß einem Ausführungsbeispiel;
- Fig. 4: eine schematische Darstellung von Bildsensorbereichen wie sie beispielsweise in der Multiaperturabbildungsvorrichtung gemäß Fig. 1 oder Fig. 3 angeordnet sein können, gemäß einem Ausführungsbeispiel
- Fig. 5: eine schematische Darstellung einer möglichen Ausgestaltung der Berechnungseinheit, gemäß einem Ausführungsbeispiel;
- Fig. 6: eine schematische Aufsicht auf die Multiaperturabbildungsvorrichtung aus Fig. 3 und gemäß einem Ausführungsbeispiel, die ausgebildet ist, um eine Tiefenkarte zu erstellen;
- Fig. 7: eine schematische perspektivische Ansicht einer Multiaperturabbildungsvorrichtung gemäß einem weiteren Ausführungsbeispiel, die eine Anzeigeeinrichtung umfasst;
- Fig. 8: eine schematische perspektivische Ansicht einer Multiaperturabbildungsvorrichtung gemäß einem Ausführungsbeispiel, die einen optischen Bildstabilisator und einen elektronischen Bildstabilisator aufweist;
- Fig. 9: eine schematische perspektivische Ansicht einer Multiaperturabbildungsvorrichtung gemäß einem weiteren Ausführungsbeispiel, die eine Fokussiereinrichtung umfasst;
- Fig. 10: eine schematische perspektivische Darstellung einer Multiaperturabbildungsvorrichtung gemäß einem weiteren Ausführungsbeispiel, bei dem die Bildsensorbereiche auf zumindest zwei voneinander verschiedenen Chips angeordnet sind und gegeneinander orientiert sind;
- Fig. 11: eine schematische perspektivische Ansicht einer Multiaperturabbildungsvorrichtung gemäß einem weiteren Ausführungsbeispiel, bei der Optiken unterschiedliche Brennweiten aufweisen;

- Fig. 12: eine schematische perspektivische Ansicht einer Vorrichtung gemäß einem weiteren Ausführungsbeispiel;
- Fig. 13: eine schematische perspektivische Ansicht einer Ergänzungsvorrichtung gemäß einem Ausführungsbeispiel;
- Fig. 14: ein schematisches Ablaufdiagramm eines Verfahrens zum Bereitstellen einer Vorrichtung gemäß einem Ausführungsbeispiel; und
- Fig. 15: ein schematisches Ablaufdiagramm eines Verfahrens zum Bereitstellen einer Multiaperturabbildungsvorrichtung gemäß einem Ausführungsbeispiel.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

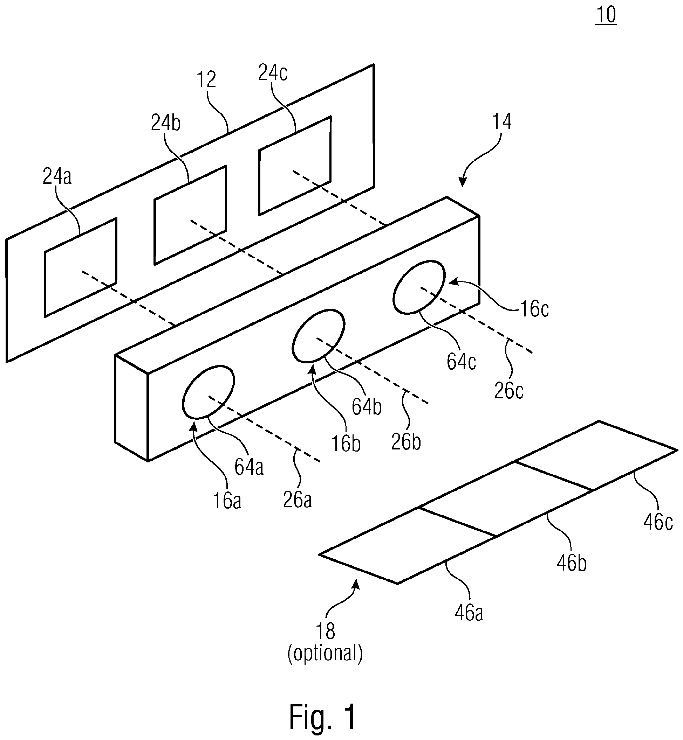

Fig. 1 zeigt eine schematische perspektivische Ansicht einer Multiaperturabbildungsvorrichtung 10 gemäß einem Ausführungsbeispiel. Die Multiaperturabbildungsvorrichtung 10 umfasst einen Bildsensor 12 mit einer Mehrzahl von Bildsensorbereichen 24a-c. Der Bildsensor 12 kann so ausgestaltet sein, dass die Bildsensorbereiche 24a-c Teil eines gemeinsamen Chips sind, kann aber alternativ auch mehrere Komponenten aufweisen, das bedeutet, die Bildsensorbereiche 24a-c können auf unterschiedlichen Chips angeordnet sein. Alternativ oder zusätzlich können die Bildsensorbereiche 24a und 24c gegenüber dem Bildsensorbereich 24b und/oder der Bildsensorbereich 24a gegenüber dem Bildsensorbereich 24b eine unterschiedliche Größe der Sensorfläche aufweisen und/oder eine unterschiedliche Anzahl und/oder Größe von Pixeln aufweisen.

Die Multiaperturabbildungsvorrichtung 10 umfasst ferner ein Array 14 von optischen Kanälen 16a-c. Jeder der optischen Kanäle 16a-c umfasst eine Optik 64a-c zur Abbildung zumindest eines Teilgesichtsfelds eines Gesamtgesichtsfelds oder Objektbereichs auf einen Bildsensorbereich 24a-c des Bildsensors 12. Jeweils eine der Optiken 64a-c ist einem der Bildsensorbereiche 24a-c zugeordnet und ausgebildet, um einen Strahlengang 26a-c zu beeinflussen, etwa durch Bündelung oder Streuung, so dass das jeweilige Teilgesichtsfeld bzw. Gesamtgesichtsfeld auf den Bildsensorbereich 24a-c abgebildet wird. Die Optiken 64a-c können an einem gemeinsamen Träger angeordnet sein, um das Array 14 zu bilden, können aber auch anders mechanisch miteinander verbunden sein oder mechanisch nicht in Kontakt stehen. Eigenschaften der optischen Kanäle, etwa Länge, Ausdehnung senkrecht zur optischen Achse oder dergleichen und/oder Eigenschaften der Optiken, etwa eine Brennweite, Blendenzahl, Aperturdurchmesser, Aberrationskorrektur oder physikalische Abmessung können zwischen den optischen Kanälen 16a, 16b und/oder 16c variieren und voneinander verschieden sein.

Zwei der optischen Kanäle 16a-c sind ausgebildet, um jeweils ein Teilgesichtsfeld auf den zugeordneten Bildsensorbereich 24a-c abzubilden. Die Abbildung eines Teilgesichtsfelds bedeutet dabei, dass das Gesamtgesichtsfeld unvollständig abgebildet wird. Ein weiterer optischer Kanal der optischen Kanäle 16a-c ist ausgebildet, um das Gesamtgesichtsfeld vollständig abzubilden. Die Multiaperturabbildungsvorrichtung 10 ist beispielsweise so ausgestaltet, dass der optische Kanal 16b ausgebildet ist, um das Gesamtgesichtsfeld vollständig zu erfassen. Die optischen Kanäle 16a und 16c sind beispielsweise ausgebildet, um einander höchstens unvollständig überlappende oder disjunkt zueinander angeordnete Teilgesichtsfelder des Gesamtgesichtsfelds zu erfassen. Das bedeutet, dass die Anordnung der Optiken 64a und 64c zur Erfassung des ersten und zweiten Teilgesichtsfelds in dem Array 14 bezogen auf die Optik 64b zur Erfassung der Abbildung des Gesamtgesichtsfelds symmetrisch sein kann und/oder dass die Anordnung der Bildsensorbereiche 24a und 24c zur Abbildung des ersten und zweiten Teilgesichtsfelds bezogen auf einen Ort des Bildsensorbereichs 24b zur Abbildung des Gesamtgesichtsfelds symmetrisch sein kann. Obwohl auch beliebige andere Zuordnungen zwischen Gesichtsfeldern, Optiken und Bildsensorbereichen möglich sind, bietet insbesondere die symmetrische Anordnung den Vorteil, dass die zusätzliche Erfassung der Teilgesichtsfelder eine symmetrische Disparität bezüglich des mittleren Blickfelds, d. h. der Erfassung des Gesamtgesichtsfelds, ermöglicht.

Die Multiaperturabbildungsvorrichtung 10 kann eine optionale Strahlumlenkeinrichtung 18 aufweisen, die wiederum Strahlumlenkbereiche 46a-c umfasst, wobei die Strahlumlenkeinrichtung 18 ausgebildet ist, um mit jedem der Strahlumlenkbereiche 46a-c einen Strahlengang 26a-c umzulenken. Die Strahlumlenkeinrichtung 18 kann eine Spiegelfläche umfassen, die die Strahlumlenkbereiche 46a-c aufweist. Alternativ können zumindest zwei der Strahlumlenkbereiche 46a-c geneigt zu einander sein und eine Mehrzahl von Spiegelflächen bilden. Alternativ oder zusätzlich kann die Strahlumlenkeinrichtung 18 eine Mehrzahl oder Vielzahl Facetten aufweisen. Die Verwendung der Strahlumlenkeinrichtung 18 kann vorteilhaft sein, wenn das zu erfassende Gesichtsfeld in einer von der Blickrichtung zwischen dem Bildsensor 12 und dem Array 14 verschiedenen Richtung der Multiaperturabbildungsvorrichtung 10 liegt. Alternativ kann in Abwesenheit der Strahlumlenkeinrichtung 18 das Gesamtgesichtsfeld entlang der Blickrichtung der Multiaperturabbildungsvorrichtung 10 bzw. der Richtung zwischen dem Bildsensor 12 und dem Array 14 bzw. darüber hinaus erfasst werden. Eine Anordnung der Strahlumlenkeinrichtung 18 kann jedoch ermöglichen, durch translatorische und/oder rotatorische Bewegung der Strahlumlenkeinrichtung 18 die Blickrichtung der Multiaperturabbildungsvorrichtung 10 zu verändern, ohne hierfür die Orientierung des Bildsensors 12 und/oder des Arrays 14 im Raum verändern zu müssen.

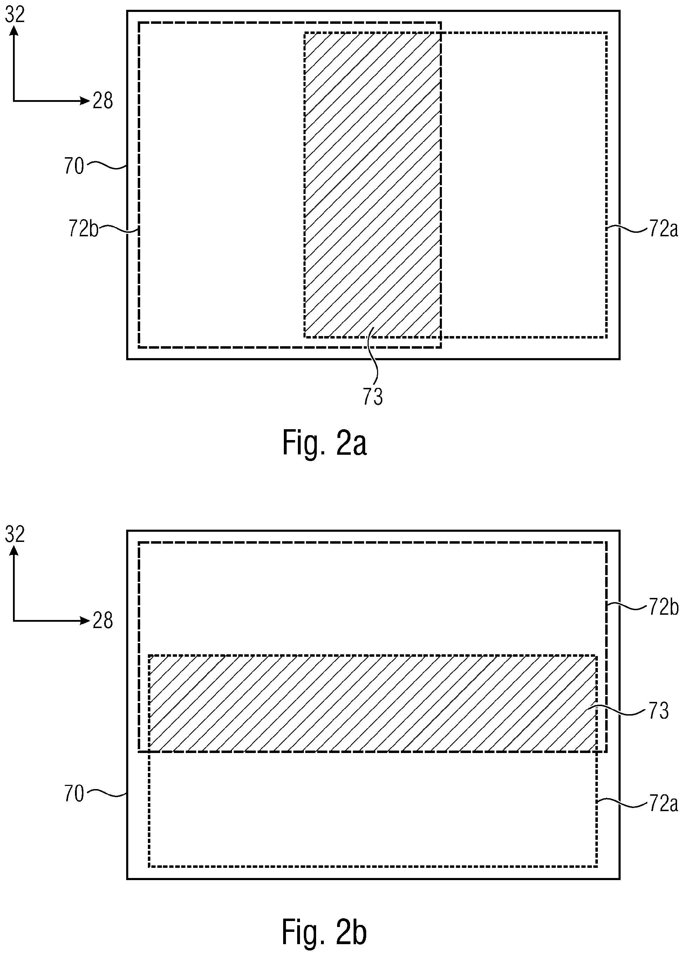

Fig. 2a zeigt eine schematische Darstellung einer Anordnung von Teilgesichtsfeldern 72a und 72b in einem Gesamtgesichtsfeld 70, das beispielsweise durch die Multiaperturabbildungsvorrichtung 10 erfassbar ist. Beispielsweise kann das Gesamtgesichtsfeld 70 mit dem optischen Kanal 16b auf den Bildsensorbereich 24b abgebildet werden. Beispielsweise kann der optische Kanal 16a konfiguriert sein, um das Teilgesichtsfeld 72a zu erfassen und auf den Bildsensorbereich 24a abzubilden. Der optische Kanal 16c kann ausgebildet sein, um das Teilgesichtsfeld 72b zu erfassen und auf den Bildsensorbereich 24c abzubilden. Das bedeutet, dass eine Gruppe von optischen Kanälen ausgebildet sein kann, um genau zwei Teilgesichtsfelder 72a und 72b zu erfassen.

Obwohl zur besseren Unterscheidbarkeit mit unterschiedlicher Ausdehnung dargestellt, können die Teilgesichtsfelder 72a und 72b entlang zumindest einer Bildrichtung 28 oder 32 eine gleiche oder vergleichbare Ausdehnung aufweisen, etwa entlang der Bildrichtung 32. Die Ausdehnung der Teilgesichtsfelder 72a und 72b kann identisch zu der Ausdehnung des Gesamtgesichtsfelds 70 entlang der Bildrichtung 32 sein. Das bedeutet, die Teilgesichtsfelder 72a und 72b können das Gesamtgesichtsfeld 70 entlang der Bildrichtung 32 vollständig erfassen oder aufnehmen und entlang einer anderen senkrecht hierzu angeordneten Bildrichtung 28 das Gesamtgesichtsfeld nur teilweise erfassen oder aufnehmen und versetzt zueinander angeordnet sein, so dass sich kombinatorisch auch entlang der zweiten Richtung eine vollständige Erfassung des Gesamtgesichtsfeldes 70 ergibt. Hierbei können die Teilgesichtsfelder 72a und 72b disjunkt zueinander sein oder höchstens unvollständig in einem Überlappbereich 73, der sich entlang der Bildrichtung 32 in dem Gesamtgesichtsfeld 70 möglicherweise vollständig erstreckt, miteinander überlappen. Eine Gruppe von optischen Kanälen umfassend die optischen Kanäle 16a und 16c kann ausgebildet sein, um zusammengenommen das Gesamtgesichtsfeld 70 vollständig abzubilden. Die Bildrichtung 28 kann beispielsweise eine Horizontale eines bereitzustellenden Bilds sein. Vereinfacht stellen die Bildrichtungen 28 und 32 zwei beliebig im Raum stehende unterschiedliche Bildrichtungen dar.

Fig. 2b zeigt eine schematische Darstellung einer Anordnung der Teilgesichtsfelder 72a und 72b, die entlang einer anderen Bildrichtung, der Bildrichtung 32, versetzt zueinander angeordnet sind und sich gegenseitig überlappen. Die Teilgesichtsfelder 72a und 72b können das Gesamtgesichtsfeld 70 entlang der Bildrichtung 28 jeweils vollständig und entlang der Bildrichtung 32 unvollständig erfassen. Der Überlappbereich 73 ist beispielsweise vollständig in dem Gesamtgesichtsfeld 70 entlang der Bildrichtung 28 angeordnet.

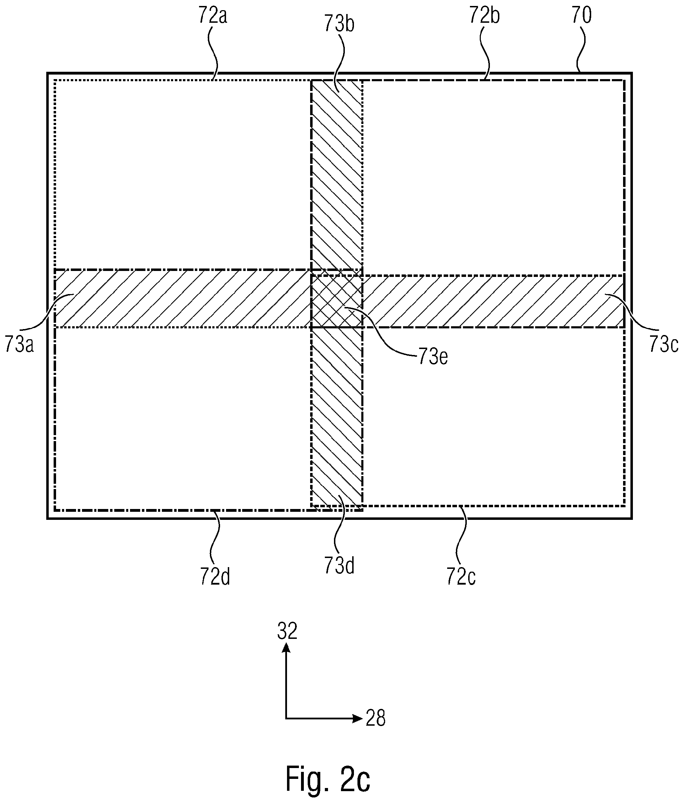

Fig. 2c zeigt eine schematische Darstellung von vier Teilgesichtsfeldern 72a bis 72d, die das Gesamtgesichtsfeld 70 in jeweils beiden Richtungen 28 und 32 unvollständig erfassen. Zwei benachbarte Teilgesichtsfelder 72a und 72b überlappen sich in einem Überlappungsbereich 73b. Zwei überlappende Teilgesichtsfelder 72b und 72c überlappen sich in einem Überlappungsbereich 73c. In ähnlicher Weise überlappen sich Teilgesichtsfelder 72c und 72d in einem Überlappungsbereich 73d und das Teilgesichtsfeld 72d mit dem Teilgesichtsfeld 72a in einem Überlappbereich 73a. Alle vier Teilgesichtsfelder 72a bis 72d können sich in einem Überlappbereich 73e des Gesamtgesichtsfelds 70 überlappen.

Zur Erfassung des Gesamtgesichtsfelds 70 und der Teilgesichtsfelder 72a-d kann eine Multiaperturabbildungsvorrichtung ähnlich wie im Zusammenhang mit Fig. 1 beschrieben ausgebildet sein, wobei das Array 14 beispielsweise fünf Optiken aufweisen kann, vier zur Erfassung von Teilgesichtsfeldern 72a-d und eine Optik zur Erfassung des Gesamtgesichtsfelds 70.

In den Überlappbereichen 73a bis 73e steht eine hohe Anzahl von Bildinformationen zur Verfügung. So wird beispielsweise der Überlappbereich 73b über das Gesamtgesichtsfeld 70, das Teilgesichtsfeld 72a und das Teilgesichtsfeld 72b erfasst. Ein Bildformat des Gesamtgesichtsfelds kann einer redundanzfreien Kombination der abgebildeten Teilgesichtsfelder entsprechen, beispielsweise der Teilgesichtsfelder 72a-d in Fig. 2c, wobei die Überlappbereiche 73a-e jeweils nur einfach gezählt werden. Im Zusammenhang mit den Fig. 2a und 2b gilt dies für die redundanzfreie Kombination der Teilgesichtsfelder 72a und 72b.

Ein Überlapp in den Überlappbereichen 73 und/oder 73a-e kann bspw. höchstens 50 %, höchstens 35 % oder höchstens 20 % der jeweiligen Teilbilder umfassen.

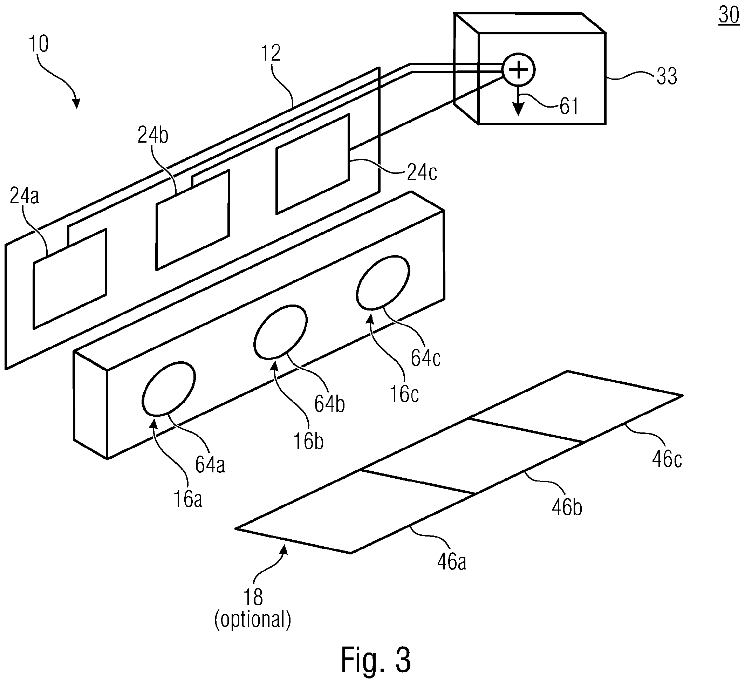

Fig. 3 zeigt eine schematische perspektivische Darstellung einer Multiaperturabbildungsvorrichtung 30 gemäß einem weiteren Ausführungsbeispiel, das die Multiaperturabbildungsvorrichtung 10 durch eine Berechnungseinheit 33 erweitert.

Die Berechnungseinheit 33 ist ausgebildet, um Bildinformationen von dem Bildsensor 12 zu erhalten, das bedeutet, Bildinformationen bezüglich der auf die Bildsensorbereiche 24a und 24c abgebildeten Teilgesichtsfelder, etwa die Teilgesichtsfelder 72a und 72b, sowie Bildinformationen des Gesamtgesichtsfelds, etwa des Gesamtgesichtsfelds 70, das auf den Bildsensorbereich 24b abgebildet werden kann. Die Berechnungseinheit 33 ist ausgebildet, um die Bildinformationen der Teilgesichtsfelder und die Bildinformationen des Gesamtgesichtsfelds miteinander zu kombinieren. Eine Kombination der Bildinformationen kann beispielsweise derart erfolgen, dass der Abtastgrad des Gesamtgesichtsfelds geringer ist als ein Abtastgrad der Teilgesichtsfelder. Unter Abtastgrad kann eine örtliche Auflösung des Teil- oder Gesamtgesichtsfeldes verstanden werden, das bedeutet, eine Größe die angibt, welche Oberfläche im Objektbereich auf welche Fläche oder Pixelgröße des Bildsensors abgebildet wird. In hierin beschriebenen Ausführungen ist mit dem Begriff Auflösung der Umfang des Teil- oder Gesamtgesichtsfeldes gemeint, der auf eine entsprechende Bildsensorfläche abgebildet wird. Eine vergleichsweise größere Auflösung bedeutet somit, dass ein konstanter Oberflächenbereich eines Gesichtsfeldes bei gleicher Pixelgröße auf eine größere Bildsensorfläche abgebildet wird, und/oder dass ein vergleichsweise kleinerer Objekt-Oberflächenbereich bei gleicher Pixelgröße auf eine konstante Bildsensorfläche abgebildet wird. Durch Kombination der Bildinformationen kann ein Abtastgrad und/oder eine Auflösung der kombinierten Bildinformation 61 gegenüber der Erfassung des Gesamtgesichtsfelds vergrößert sein.

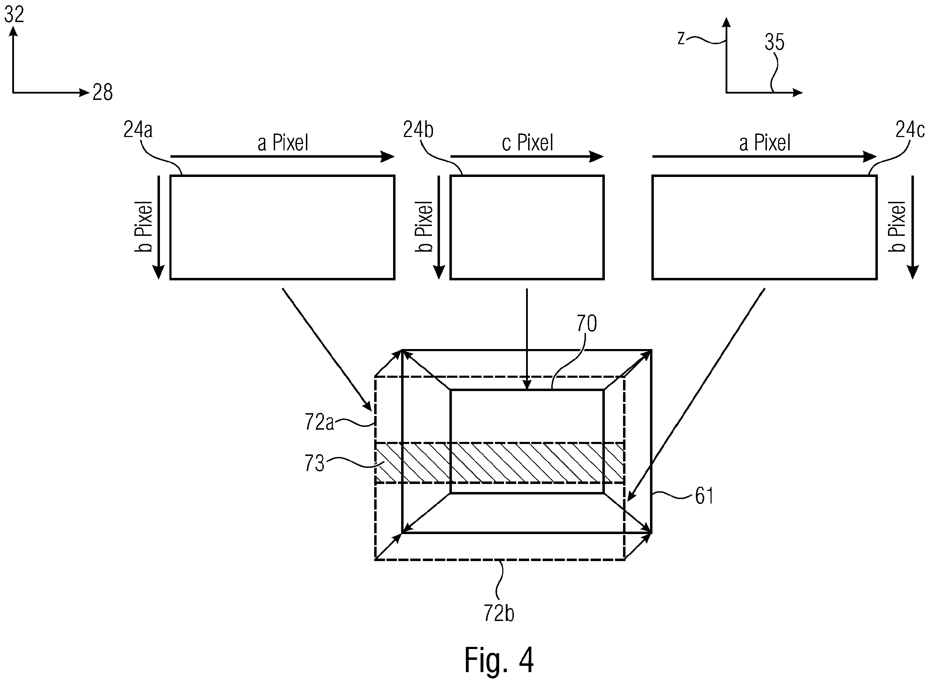

Fig. 4 zeigt eine schematische Darstellung von Bildsensorbereichen 24a-c wie sie beispielsweise in der Multiaperturabbildungsvorrichtung 10 oder 30 angeordnet sein können. Auf den Bildsensorbereich 24a wird beispielsweise das Teilgesichtsfeld 72a abgebildet. Das Teilgesichtsfeld 72b wird beispielsweise auf den Bildsensorbereich 24c abgebildet. Das Gesamtgesichtsfeld 70 wird beispielsweise auf den Bildsensorbereich 24b abgebildet. Die Anordnung der Teilgesichtsfelder 72a und 72b im Raum kann beispielsweise der Konfiguration gemäß Fig. 2b entsprechen.

Die Bildsensorbereiche 24a, 24b und 24c können entlang der Bildrichtung 32 eine gleiche oder innerhalb eines Toleranzbereichs von 20%, 10% oder 5% gleiche physikalische Ausdehnung b, die einer korrespondierenden Anzahl von Pixeln entsprechen kann, aufweisen. Entlang der Bildrichtung 28 können die Bildsensorbereiche 24a und 24c eine physikalische Ausdehnung a, die einer korrespondierenden Anzahl von a Pixeln entsprechen kann aufweisen. Die Ausdehnung oder Pixel a können entlang der Bildrichtung 28 größer sein als die Ausdehnung oder Anzahl von Pixeln c des Bildsensorbereichs 24b. Da die Teilgesichtsfelder 72a und 72b entlang der Bildrichtung 28 und verglichen mit dem Gesamtgesichtsfeld 70 gleich groß sind, findet eine Abtastung mit einer höheren Auflösung oder einem höheren Abtastgrad des Gesamtgesichtsfelds entlang der Bildrichtung 28 statt, das bedeutet, ein geringerer Bereich in dem Objektbereich wird auf ein Pixel konstanter Größe abgebildet, so dass die resultierende kombinatorische Auflösung bzw. der Abtastgrad vergrößert ist. Es kann ein Superresolutionseffekt implementiert werden, etwa wenn die Pixel der Abbildungen der Teilgesichtsfelder eine Subpixelversatz zueinander aufweisen.

Entlang der Bildrichtung 32 werden bspw. eine Anzahl von 2 x b Pixel genutzt, um das Gesamtgesichtsfeld 70 über die Teilgesichtsfelder 72a und 72b abzubilden, wobei hier der Überlappbereich 73 zu berücksichtigen ist. Durch die disjunkte oder lediglich teilweise Überlappung der Teilgesichtsfelder 72a und 72b resultiert aber auch entlang der Bildrichtung 32 eine verglichen mit der Erfassung des Gesamtgesichtsfelds 70 in dem Bildsensorbereich 24 vergrößerte Auflösung.

Die kombinierte Bildinformation des Gesamtgesichtsfelds 61 kann somit durch Kombination der Abbildungen in den Bildsensorbereichen 24a bis 24c verglichen mit der in dem Abbildungsbereich 24b erhaltenen Auflösung vergrößert sein. Ein Aspektverhältnis des Bildes in dem Bildsensorbereich 24b kann einen Wert von 3:4 aufweisen. Dies ermöglicht den Erhalt des kombinatorischen Bildes mit einem gleichen Aspektverhältnis. Eine Auflösung in den Bildsensorbereichen 24a und/oder 24c kann entlang der jeweiligen Bildrichtung und/oder im entstehenden Bild innerhalb eines Toleranzbereichs von 20 %, 10 % oder exakt um zumindest 30 %, zumindest 50 % oder zumindest 100 % größer sein, als in dem Bildsensorbereich 24b, wobei hier eine Ausdehnung des Überlappbereichs zu berücksichtigen ist.

Die Bildsensorbereiche 24a-c können entlang einer Zeilenerstreckungsrichtung 35 angeordnet sein, die beispielsweise parallel zu der Bildrichtung 28 angeordnet sein kann und/oder entlang derer die Optiken 64a-c der Multiaperturabbildungsvorrichtung 10 oder 30 angeordnet sein können. Entlang einer Richtung z senkrecht hierzu, die beispielsweise eine Dickenrichtung der Multiaperturabbildungsvorrichtung sein kann, können die Bildsensorbereiche 24a-c eine innerhalb des Toleranzbereichs gleiche Ausdehnung aufweisen, das bedeutet, die Auflösungserhöhung der Erfassung des Gesamtgesichtsfelds kann unter Vermeidung einer zusätzlichen Dicke der Multiaperturabbildungsvorrichtung erhalten werden.

In anderen Worten kann eine lineare symmetrische Anordnung von mindestens drei Kamera-Kanälen, d. h. optischen Kanälen, implementiert sein, wobei einer der optischen Kanäle, bevorzugt der mittlere optische Kanal, das gesamte Gesichtsfeld abdeckt und die (beiden) äußeren Kanäle jeweils nur einen Teil des Gesichtsfelds, etwa oben/unten oder links/rechts, so, dass sie zusammen auch das gesamte Gesichtsfeld abdecken und zusätzlich noch eine leichte Überlappung in der Mitte des Gesichtsfelds aufweisen können. Das bedeutet, links/rechts bzw. oben/unten können hochaufgelöste Teilbilder erhalten werden. In der Mitte wird ein geringer aufgelöstes Bild, welches das gesamte relevante Gesichtsfeld abdeckt, erfasst. Die Auflösung in dem mittleren Bild kann soweit reduziert sein, wie die entsprechend kürzere Brennweite für die gleiche Bildhöhe, d. h., ohne Berücksichtigung des Aspektverhältnisses, und die gleiche Pixelgröße es vorgibt oder es ermöglicht. Anders ausgedrückt, die Bildsensorhöhe 24a, 24b und 24c ist gleich. Ohne Überlapp ist daher die Bildhöhe in dem Bildsensorbereich 24b ca. halb so groß wie eine kombinierte Bildhöhe von 24a und 24c. Um das gleiche Gesichtsfeld abzubilden, kann daher die Brennweite (oder auch Vergrößerung) der Optik für den Bildsensorbereich 24b (optischer Kanal 16b) halb so lang bzw. groß sein wie die für 24a und 24c. Bei gleicher Pixelgröße bedeutet das halbe Auflösung (oder Abtastung des Gesichtsfeldes) in 24b gegenüber 24a und c kombiniert. Entsprechende Bildbreiten folgen einfach aus dem gewünschten Aspektverhältnis der Bilder.

Der mittlere Kamerakanal ist die Referenzkamera für die Tiefenkartenerzeugung, falls diese durch die Berechnungseinheit erstellt wird. Diese Anordnung umfassend die Symmetrie bezüglich des mittleren Kanals ermöglicht eine hohe Güte des erhaltenen kombinierten Gesamtbilds bezüglich der Okkultation bzw. Verdeckungen in der Tiefenkarte. Das mittlere Bild ist daher sinnvollerweise auch die Referenz für die Berechnung des höher aufgelösten kombinierten Bilds. In die niedrigaufgelöste Referenz werden die zumindest beiden höher aufgelösten Bilder blockweise eingesetzt. Sie dienen also als Material, das dann zum Einsatz kommen kann, wenn die Passgenauigkeit gewährleistet ist, das bedeutet, wenn übereinstimmende Merkmale in den Teilgesichtsfeldern und dem gesamten Gesichtsfeld gefunden werden. Das Einsetzen kann in sehr kleinen Blöcken erfolgen, so dass auch bei feinen Objekten mit großen Tiefensprüngen Probleme durch Parallaxe vermieden werden können. Die passenden Blöcke werden beispielsweise per Korrespondenz gesucht, was bedeuten kann, dass eine Disparitätskarte (Disparity Map) erzeugt wird, also eine Tiefenkarte. Falls aber für einen niedrigaufgelösten Block nicht mit ausreichender Sicherheit ein hochaufgelöster Block gefunden wird, hat dies keine katastrophalen Auswirkungen. Es wird einfach das niedrigaufgelöste Ursprungsbild belassen. Anders gesagt: Löcher in der Tiefenkarte führen lediglich zu unschärferen Stellen im Gesamtbild statt zu deutlich sichtbaren Artefakten.

In anderen Worten kann der mittlere Bildsensor durch kürzere Brennweite ein niedrigerer aufgelöstes Bild erfassen, das das gesamte Gesichtsfeld (Field of View - FOV) abdeckt und von Haus aus, d. h. nativ, das gewünschte Aspektverhältnis aufweist. Diese Kamera kann auch als Referenzkamera bezeichnet werden, beispielsweise da das erhaltene kombinierte Bild ihre Perspektive aufweist. Es erfolgt eine Zusammenfügung höher aufgelöster Teilbilder, die sich teilweise überlappen können und zusammengenommen ein gleiches Aspektverhältnis aufweisen, wie die Referenzkamera. Die Zusammenfügung der Bilder der Teilgesichtsfelder mit der Referenzkamera erlaubt ein äußerst korrektes Stitching im Überlappbereich, da dort zwar ein niedriger aufgelöstes, aber von Haus aus korrektes Bild vorliegt. Die Höhe aller drei Bildsensoren ist gemäß einer vorteilhaften Ausgestaltung gleich bzw. nahe an Gleichheit, um verfügbare Bauhöhen möglichst optimal auszunutzen. Alle Kameras können über einen gemeinsamen Spiegel (Strahlumlenkeinrichtung) umgelenkt werden. Eine Tiefenkarte kann bei Bedarf wie folgt berechnet werden. Im Überlappbereich 73 der beiden hochaufgelösten Teilbilder durch selbige sowie das niedrigaufgelöste Gesamtbild; in den übrigen Bereichen jeweils durch die Kombination eines der hochaufgelösten Teilbilder mit dem entsprechenden Abschnitt des niedrigaufgelösten Gesamtbilds.

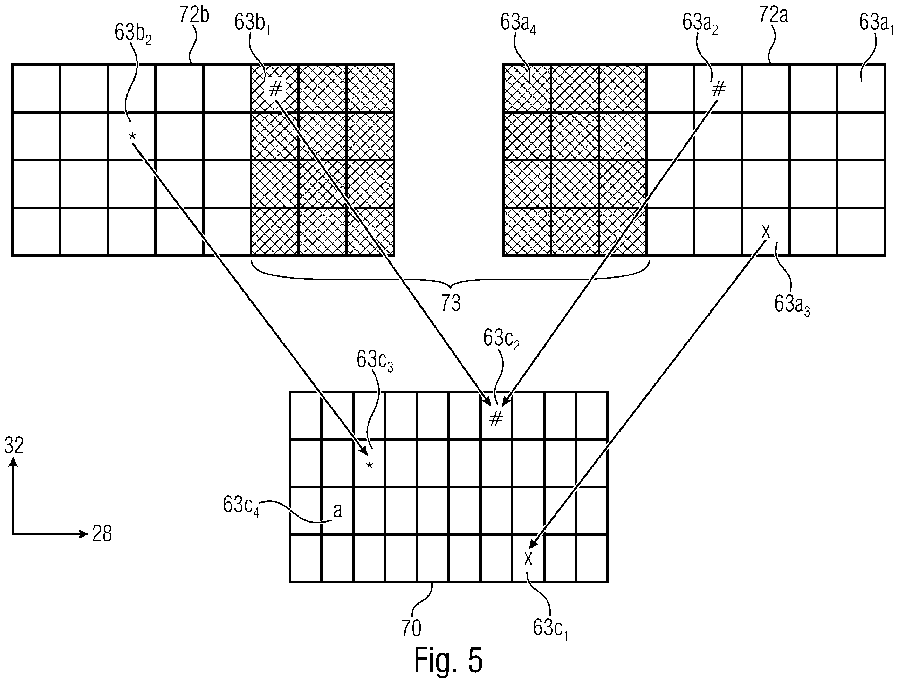

Fig. 5 zeigt eine schematische Darstellung einer möglichen Ausgestaltung der Berechnungseinheit 33. Die Berechnungseinheit 33 kann ausgebildet sein, um die Bildinformation des Gesamtgesichtsfelds 70 und die Bildinformationen der Teilgesichtsfelder 72a und 72b in Bildblöcke 63a des Teilgesichtsfelds 72a, 63b und des Teilgesichtsfelds 72b und 63c des Gesamtgesichtsfelds 70 aufzuteilen. Ein Bildblock kann entlang beider Bildrichtungen 28 und 32 eine bestimmte Anzahl von Pixeln aufwiesen. Die Blöcke können bspw. eine Größe entlang der Bildrichtung 28 und 32 von zumindest 2 und höchstens 1000 Pixeln, von zumindest 10 und höchstens 500 Pixeln oder von zumindest 20 und höchstens 100 Pixeln aufweisen.

Die Berechnungseinheit kann ausgebildet sein, um blockweise eine in einem Bildblock des Gesamtgesichtsfelds enthaltende Bildinformation einer übereinstimmenden Bildinformation eines Bildblocks des ersten oder zweiten Teilgesichtsfelds 72a oder 72b zuzuordnen, um durch Kombination des ersten und zweiten Bildblocks eine Auflösung der Bildinformation des Gesamtgesichtsfelds in der kombinierten Bildinformation zu erhöhen. Der erste und der zweite Bildblock kann jeweils ein übereinstimmender Bildblock einer Abbildung unterschiedlicher Teilgesichtsfelder in einem Überlappungsbereich derselben sein. Alternativ oder zusätzlich kann der erste oder zweite Block ein Block des Gesamtbildes und der andere Block ein Block des Teilbildes sein. Die Berechnungseinheit 33 ist beispielsweise ausgebildet, um das in dem Block 63a₃ mit x dargestellte Objekt als übereinstimmend mit dem Objekt x in dem Block 63ci des Gesamtgesichtsfelds 70 zu identifizieren. Basierend auf der verglichen mit dem Gesamtgesichtsfeld 70 höheren Auflösung des Teilgesichtsfelds 72a kann die Berechnungseinheit die Bildinformationen beider Blöcke 63a₃ und 63ci miteinander kombinieren, um die resultierende Auflösung in dem Block höher zu erhalten, als sie bezüglich des Gesamtgesichtsfelds ursprünglich war. Dabei kann die resultierende kombinatorische Auflösung dem Wert der Auflösung der Erfassung des Teilgesichtsfelds 72a entsprechen oder gar höher sein. Das mit # dargestellte Objekt in einem Block 63c₂ des Gesamtgesichtsfelds 70 wird von der Berechnungseinheit beispielsweise in einem Block 63a₂ des Teilgesichtsfelds 72a und in einem Block 63b₁ des Teilgesichtsfelds 72b identifiziert, so dass zur Verbesserung der Bildqualität Bildinformationen aus beiden Abbildungen der Teilgesichtsfelder 72a und 72b herangezogen werden können.

Ein in einem Block 63c₃ mit * dargestelltes Objekt wird von der Berechnungseinheit beispielsweise in einem Block 63b₂ des Teilgesichtsfelds 72b identifiziert, so dass die Bildinformationen des Blocks 63b₂ von der Berechnungseinheit beispielsweise genutzt werden, um die Bildinformation in dem Block 63c₃ zu erhöhen.

In einem Fall, in dem kein Block der Teilgesichtsfelder 72a und 72b einem Block des Gesamtgesichtsfelds zugeordnet werden kann, wie es beispielsweise für den Block 63c₄ dargestellt ist, kann die Berechnungseinheit ausgebildet sein, um einen Block des kombinierten Gesamtbildes so auszugeben, das zumindest der Block 63c₄ in dem Gesamtbild angeordnet ist. D. h., es kann eine Bildinformation dargestellt werden, auch wenn lokal keine Erhöhung der Auflösung erfolgt. Dies führt zu höchstens geringfügigen Änderungen in dem Gesamtbild, das bedeutet, am Ort des Blocks 63c₄ ist beispielsweise eine lokal reduzierte Auflösung vorhanden.

Die Berechnungseinheit 33 kann ausgebildet sein, um ein Stitching der Bildinformationen der Teilgesichtsfelder 72a und 72b basierend auf der Bildinformation des Gesamtgesichtsfelds 70 auszuführen. Das bedeutet, dass die Gesamtabbildung des Gesamtgesichtsfelds genutzt werden kann, um eine Ausrichtung der Teilbilder der Teilgesichtsfelder 72a und 72b zueinander zumindest zu unterstützen oder gar auszuführen. Alternativ oder zusätzlich kann die Information aus der Gesamtabbildung des Gesamtgesichtsfelds genutzt werden um die die Anordnung der Objekte der Szene aus den Teilbildern und/oder in einem Teilbild innerhalb des Gesamtbilds zu unterstützen oder gar auszuführen. Das Gesamtgesichtsfeld weist eine hohe Anzahl oder gar alle Objekte auf, die auch in den Teilgesichtsfeldern 72a und 72b dargestellt sind, so dass ein Vergleich der jeweiligen Teilbilder mit dem Gesamtbild des Gesamtgesichtsfelds und/oder ein Vergleich der Position des Objekts eine Ausrichtung an dem Gesamtbild ermöglicht und somit ein Stitching der Teilbilder untereinander ermöglicht.

In andern Worten liefert das niedrigaufgelöste Bild immer prior eine Grundlage zur Unterstützung des Stitchings der hochaufgelösten Bilder, das bedeutet, eine Orientierungsgrundlage, da Objekte in dem Gesamtbild schon verbunden vorliegen. Stitching kann neben einer einfachen Aneinanderfügung zweier globaler Teilbildbereiche auch bedeuten, dass Objekte je nach ihrem Abstand in einem gestitchten Bild anders (hinsichtlich ihrer lateralen Position im Bild) wieder in die Szene bzw. vor den Hintergrund eingeordnet werden, was je nach abstandsmäßiger Objektverteilung in der Szene erforderlich oder gewünscht sein kann. Die hierin beschriebenen Konzepte vereinfachen den Stitching-Prozess erheblich, selbst wenn eine Tiefenkarte für exaktes Stitching notwendig sein sollte. Okkultationsprobleme durch eine fehlende Kamera in der Mittenposition können vermieden werden, da zumindest drei optische Kanäle zumindest drei Blickrichtungen hin zu dem Gesamtgesichtsfeld ermöglichen. Eine Verdeckung in einem Blickwinkel kann so durch ein oder zwei andere Blickwinkel reduziert oder verhindert werden.

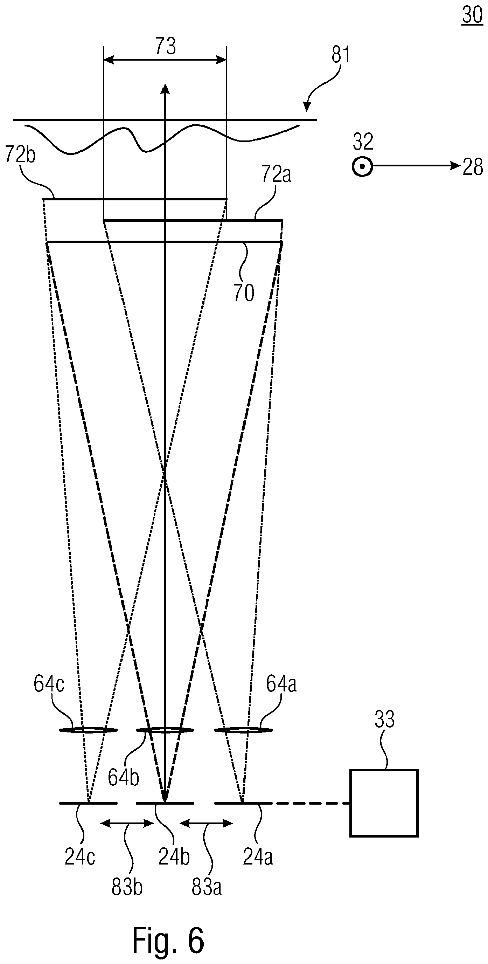

Fig. 6 zeigt eine schematische Aufsicht auf die Multiaperturabbildungsvorrichtung 30 gemäß einem Ausführungsbeispiel. Die Berechnungseinheit 33 kann ausgebildet sein, um eine Tiefenkarte 81 zu erstellen. Die Tiefenkarte 81 kann sich dabei auf die Bildinformation des Gesamtgesichtsfelds 70 beziehen. Die Berechnungseinheit 33 ist beispielsweise ausgebildet, um Disparitäten 83a zwischen den Abbildungen des Teilgesichtsfelds 72a und des Gesamtgesichtsfelds 70 und 73b und zwischen den Abbildungen des Teilgesichtsfelds 72b und dem Gesamtgesichtsfeld 70 auszunutzen um eine Tiefenkarte zu erstellen. Das bedeutet, dass durch die physikalische Beabstandung der Optiken 64a, 64b und 64c sowie der Bildsensorbereiche 24a, 24b und 24c unterschiedliche Blickwinkel bzw. Perspektiven erhalten werden, die für die Erstellen der Tiefenkarte 81 durch die Berechnungseinheit 33 genutzt werden. Die Berechnungseinheit 33 kann ausgebildet sein, um in dem Überlappbereich 73, in dem sich die Teilgesichtsfelder 72a und 72b überlappen, die Tiefenkarte 81 unter Verwendung der Bildinformationen der Teilgesichtsfelder 72a und 72b zu erstellen. Dies ermöglicht die Verwendung einer verglichen mit den Einzeldisparitäten 83a und 83b größeren Disparität, vereinfacht der Summe der Einzeldisparitäten, sowie die Verwendung der hochaufgelösten (Teil-)Bilder. Das bedeutet, in einem Ausführungsbeispiel kann die Berechnungseinheit 33 ausgebildet sein, um die Tiefenkarte 81 in dem Überlappbereich 73 ohne die Informationen des Gesamtgesichtsfelds 70, das auf den Bildsensorbereich 24b abgebildet wird, zu erstellen. Alternativ ist eine Verwendung der Information des Gesamtgesichtsfeldes 70 in dem Überlappbereich 73 möglich und bspw. für eine hohe Informationsdichte vorteilhaft.

Die Abbildungen in den Bildsensorbereichen 24a und 24c können gemäß einer vorteilhaften Weiterbildung ohne die Verwendung von (z.B. RGB-)Bayer-Farbfilter-Anordnungen wie in 24b oder zumindest unter Verwendung einheitlicher Farbfilter erfolgen, so dass die abgebildeten ersten und zweiten Teilgesichtsfelder mit einer farbeinheitlichen Luminanzinformation von der Multiaperturabbildungsvorrichtung bereitgestellt werden. So kann beispielsweise ein farbeinheitliches Infrarot-Filter, Ultraviolett-Filter, Rot-Filter, Blau-Filter oder dergleichen oder eben gar kein Filter angeordnet sein, während ein mehrfarbiges Filter wie etwa eine Bayer-Anordnung wie in 24b nicht angeordnet ist. In anderen Worten, da die äußeren Kanäle nur Detail beitragen, um die Qualität des Bilds des Gesamtgesichtsfelds zu erhöhen, kann es vorteilhaft sein, wenn die äußeren Kanäle 16a und 16c keine Farbfilter aufweisen. Die äußeren Kanäle tragen dann zwar nur Luminanz-Informationen bei, also höhere generelle Schärfe/Details und keine bessere Farbinformation, der Vorteil, der damit erhalten wird, liegt in der höheren Empfindlichkeit und damit in einem geringeren Rauschen, was seinerseits letztlich auch eine bessere Auflösung bzw. Schärfe ermöglicht, da das Bild weniger zu glätten ist, da beispielsweise kein Bayer-Farbfilter-Muster über den Pixeln liegt, die Auflösung in den reinen Luminanz-Kanälen ist aber von Haus aus auch schon höher (idealerweise fast doppelt so hoch), da kein de-Bayering mehr notwendig ist. Effektiv kann ein Farb-Pixel ca. doppelt so groß sein, wie ein Schwarz-Weiß Pixel. Physisch gegebenenfalls nicht, denn hier können Schwarz/Weiß-Pixel nicht nur für Auflösung genutzt werden, sondern auch für Farb-Diskriminierung durch Überlagerung von Schwarz/Weiß-Pixeln mit dem typischen RGBG Filtermuster.

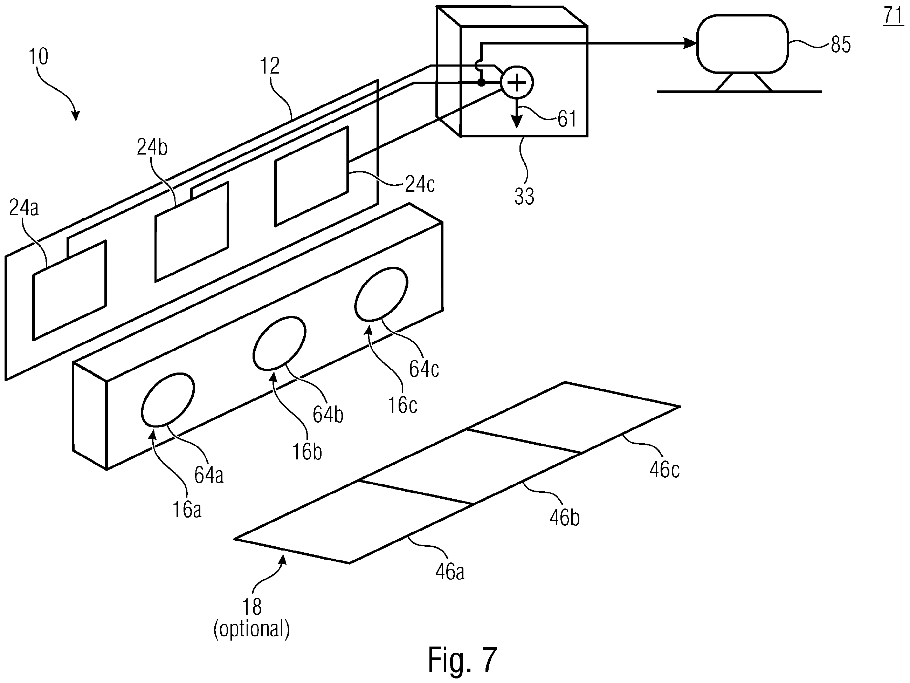

Fig. 7 zeigt eine schematische perspektivische Ansicht einer Multiaperturabbildungsvorrichtung 71 gemäß einem weiteren Ausführungsbeispiel, die eine Anzeigeeinrichtung 85 umfasst. Die Multiaperturabbildungsvorrichtung 71 ist ausgebildet, um die Darstellung des auf den Bildsensorbereich 24b abgebildeten Gesamtgesichtsfelds 70 mit der Anzeigeeinrichtung 85 wiederzugeben. Hierfür kann beispielsweise die Berechnungseinheit 33 ausgebildet sein, um das entsprechende Signal vom Bildsensor 12 an die Anzeigeeinrichtung 85 weiterzuleiten. Alternativ kann die Anzeigeeinrichtung 85 auch direkt mit dem Bildsensor 12 gekoppelt sein und das entsprechende Signal von dem Bildsensor 12 erhalten.

Die Anzeigeeinrichtung 85 ist ausgebildet, um die Bildinformation des Gesamtgesichtsfelds mit höchstens der Auflösung zu empfangen und auszugeben, die von dem Bildsensorbereich 24b bereitgestellt wird. Bevorzugt wird die Auflösung des auf den Bildsensorbereich 24b abgebildeten Gesamtgesichtsfelds unverändert an die Anzeigeeinrichtung 85 weitergegeben. Das ermöglicht eine Anzeige des möglicherweise gegenwärtig aufgenommenen Bilds oder Videos, etwa als Vorschau für einen Benutzer, so dass dieser die Aufnahme beeinflussen kann. Die höher aufgelösten Bilder, die durch die kombinierte Bildinformation 61 bereitgestellt werden, können zu einem anderen Zeitpunkt der Anzeigeeinrichtung 85 bereitgestellt werden, einer anderen Anzeigeeinrichtung bereitgestellt werden, gespeichert oder übertragen werden. Auch ist es möglich, die kombinierte Bildinformation 61 zeitweise, d. h. nur bei Bedarf, zu erhalten und ansonsten das gegebenenfalls niedriger aufgelöste Bild des Gesamtgesichtsfelds 70 zu nutzen, wenn dies für die gegenwärtige Benutzung ausreichend ist, etwa eine Betrachtung in der Anzeigevorrichtung 85, ohne dass eine Tiefenkarte benötigt wird oder auf ein Hineinzoomen in Details verzichtet wird. Dies ermöglicht eine Einflussnahme auf die Bilderfassung ohne rechenund zeitaufwändige Kombination der Bildsignale, was sich vorteilhaft auf die Verzögerung in der Anzeigeeinrichtung 85 und den Energiebedarf für die Berechnungen auswirkt. Durch Aneinanderreihen mehrerer Bilder durch die Multiaperturabbildungsvorrichtung 71 kann auch ein Videosignal von dem Bildsensor 12 erhalten werden und ein Videosignal des Gesamtgesichtsfelds auf der Anzeigeeinrichtung 85 ausgegeben werden.

Beispielsweise kann die Multiaperturabbildungsvorrichtung 71 aber auch eine andere hierin beschriebene Multiaperturabbildungsvorrichtung, etwa die Multiaperturabbildungsvorrichtung 10, 30 oder 60 als Mobiltelefon, als Smartphone, als Tablet oder als Monitor gebildet sein.

Die Multiaperturabbildungsvorrichtung 71 kann eine Echtzeit-Vorschau auf dem Display 85 bereitstellen, die beiden äußeren Kamerakanäle müssen also nicht immer aktiviert werden, so dass Strom gespart werden kann und/oder dass kein zusätzlicher Rechenaufwand für die Verknüpfung der Teilbilder erforderlich ist, was eine reduzierte Prozessorauslastung und einen reduzierten Energieverbrauch ermöglicht, was auch eine längere Batterielaufzeit ermöglicht. Alternativ oder zusätzlich können vorerst Rohdaten gespeichert werden und ein hochaufgelöstes Bild erst bei einer Übertragung auf eine andere Recheneinheit wie einen PC und/oder bei einer Betrachtung auf dem Anzeigegerät mit Zoom in die Details generiert werden. Hierbei ist es möglich, das kombinatorische Bild gegebenenfalls nur für relevante Bildbereiche zu erstellen oder für irrelevante Bildbereiche das kombinatorische Bild zumindest bereichsweise nicht zu erstellen. Relevante Bereiche können bspw. Bildbereiche sein, für die eine vergrößerte Darstellung (Zoom) erwünscht ist.

Sowohl für Einzelbilder als auch für ein Video ist das Bild des Bildsensorbereichs 24b also direkt verwendbar und hat gegebenenfalls ausreichende Auflösung für ein Video. Es ist ebenfalls vorstellbar, dass die mittlere Kamera gleich in passender Auflösung für gängige Video-Formate bereitgestellt werden, also etwa 1080p oder 4K, so dass sonst übliches Resampling (Abtastratenkonvertierung), Binning (Zusammenfassen benachbarter Bildelemente) oder Skipping (Überspringen von Pixeln) vermieden werden kann, wobei die Auflösung so hoch sein kann, dass hochaufgelöste Standbilder erzeugt werden können.

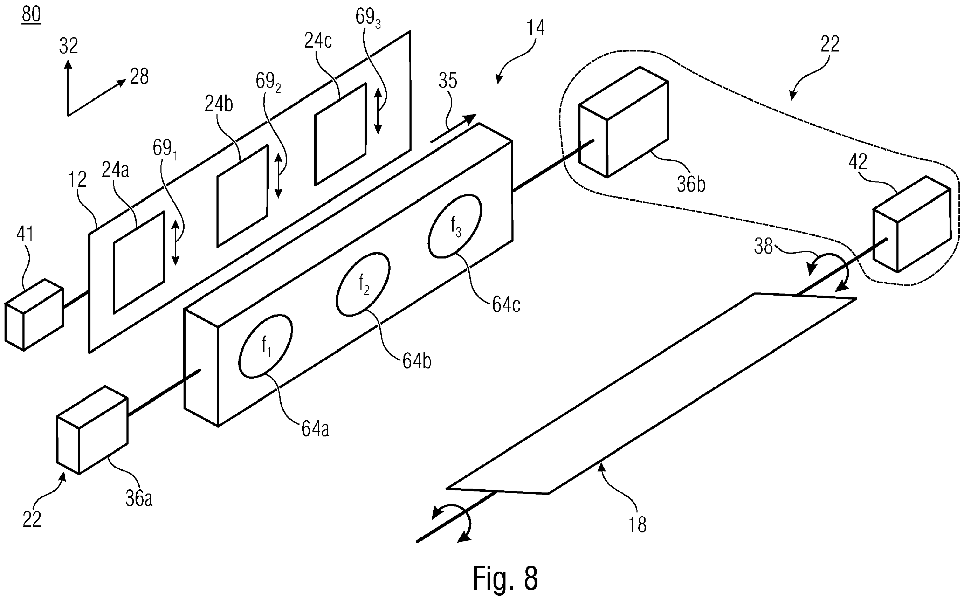

Fig. 8 zeigt eine schematische perspektivische Ansicht einer Multiaperturabbildungsvorrichtung 80, die einen optischen Bildstabilisator 22 und einen elektronischen Bildstabilisator 41 aufweist. Die nachfolgend beschriebenen Aspekte zur Bildstabilisierung sind ohne Einschränkungen mit den Funktionalitäten der Berechnungseinheit 33, einzeln oder in Kombination miteinander, realisierbar.

Der optische Bildstabilisator 22 umfasst bspw. Aktoren 36a, 36b und 42, wobei die Aktoren 36a und 36b ausgebildet sind, um die optische Bildstabilisierung der Abbildungen der Teilgesichtsfelder in den Bildsensorbereichen 24a bis 24c durch eine Verschiebung des Arrays 14 entlang der Zeilenerstreckungsrichtung 35 zu erreichen. Ferner ist der optische Bildstabilisator 22 bspw. ausgebildet, um eine optische Bildstabilisierung entlang der Bildachse 32 durch eine Rotationsbewegung 38 der Strahlumlenkeinrichtung 18 zu erhalten. Bspw. weisen die Optiken 64a und 64b des Arrays 14 eine innerhalb eines Toleranzbereichs von höchstens 10 %, höchstens 5 % oder höchstens 3 % von einander verschiedene effektive Brennweite f₁ bzw. f₃ auf, um die Teilgesichtsfelder in etwa gleich zu erfassen. Die Optik 64b kann eine Brennweite f₂ aufweisen, die um zumindest 10 % hiervon verscheiden ist. Die kanalglobale Rotationsbewegung 38 führt im Zusammenspiel mit unterschiedlichen Brennweiten f₂ und f₁ bzw. innerhalb der Brennweitenunterschiede zwischen f₁ und f₃ zu einer unterschiedlichen Verschiebung 69₁ bis 69₃ der Abbilder in den Bildsensorbereichen 24a-c. Das bedeutet, dass der optische Bildstabilisator 22 durch die kanalglobale Rotationsbewegung 38 unterschiedliche Effekte in den Abbildungen erzielt, so dass zumindest eine, mehrere oder alle Abbildungen von einem theoretischen fehlerfreien Zustand abweichen. Der optische Bildstabilisator 22 kann ausgebildet sein, um die Abweichungen aller Bilder global zu minimieren, was jedoch dazu führen kann, dass in jedem der Abbilder Fehler entstehen. Alternativ kann der optische Bildstabilisator 22 ausgebildet sein, um eine Referenzabbildung in einem der Bildsensorbereiche 24a-d auszuwählen und die Steuerung des Aktors 42 so auszuführen, dass die Abbildung in dem Referenzabbild oder Referenzkanal möglichst exakt ist, was auch als fehlerfrei bezeichnet werden kann. Das bedeutet, dass durch die kanalglobale optische Bildstabilisierung ein Kanal bezogen auf die beeinflusste Bildrichtung fehlerfrei gehalten werden kann, während die anderen Kanäle bedingt durch die unterschiedlichen Brennweiten f₁ bis f₃ von dieser Referenzabbildung abweichen. In anderen Worten, wird ein Kanal mit dem mechanischen realisierten optischen Bildstabilisator korrigiert, der für alle Kanäle eine Wirkung entfaltet, jedoch nicht alle Kanäle stabil hält. Diese weiteren Kanäle werden mit dem elektronischen Bildstabilisator zusätzlich korrigiert.

Der optische Bildstabilisator kann ausgebildet sein, um die Relativbewegungen für die optischen Kanäle kanalindividuell bereitzustellen und/oder individuell für Gruppen von optischen Kanälen, etwa für die Gruppe der optischen Kanäle 16a und 16c zur Erfassung der Teilgesichtsfelder und für die Gruppe umfassend den optischen Kanal 16b zur Erfassung des Gesamtgesichtsfeldes.

Der elektronische Bildstabilisator 41 kann ausgebildet sein, um eine kanalindividuelle elektronische Bildstabilisierung in jedem Kanal nach einem festgelegten funktionellen Zusammenhang auszuführen, der von den Relativbewegungen zwischen dem Bildsensor 12, dem Array 14 und der Strahlumlenkeinrichtung 18 abhängt. Der elektronische Bildstabilisator 41 kann ausgebildet sein, um jede Abbildung einzeln und individuell zu stabilisieren. Der elektronische Bildstabilisator 41 kann hierfür globale Werte nutzen, etwa die Kamerabewegung oder dergleichen, um die optische Qualität der Bilder zu erhöhen. Besonders vorteilhaft ist es, wenn der elektronische Bildstabilisator 41 ausgebildet ist, um eine elektronische Bildkorrektur ausgehend von einer Referenzabbildung des optischen Bildstabilisators 22 auszuführen. Die unterschiedlichen Brennweiten können den funktionellen Zusammenhang zwischen den unterschiedlichen Änderungen in den Abbildungen durch die optische Bildstabilisierung in bevorzugt linearer Form bereitstellen, etwa in der Form: $Abbildungsfehler = f \left({f}_{i}, Relativbewegung\right) ,$ das bedeutet, der Abbildungsfehler global oder bezogen auf den Referenzkanal ist darstellbar als Funktion der Brennweite oder Brennweitenunterschiede und der ausgeführten Relativbewegung zum Wechsel der Blickrichtung oder zur optischen Bildstabilisierung. Der elektronische Bildstabilisator 41 kann ein Ausmaß der Relativbewegung zwischen Bildsensor 12, Array 14 und Strahlumlenkeinrichtung 18 mit den Brennweiten f₁ bis f₃ oder Brennweitendifferenzen bezogen auf den Referenzkanal verknüpfen, um eine zuverlässige Information über die auszuführende elektronische Bildstabilisierung zu erhalten, und, um den funktionellen Zusammenhang herzustellen und/oder auszunutzen. Die erforderlichen Daten der optischen Eigenschaften und/oder des funktionellen Zusammenhangs können während einer Kalibrierung gewonnen werden. Die Ausrichtung von Bildern an einander zum Bestimmen einer Verschiebung eines Bildes gegenüber einem anderen Bild kann auch durch Bestimmen eines übereinstimmendes Merkmals in den Abbildern der Teilgesichtsfelder erfolgen, etwa Kantenverläufe, Objektgrößen oder dergleichen. Dies kann bspw. durch den elektronischen Bildstabilisator 41 identifiziert werden, der ferner ausgebildet sein kann um die elektronische Bildstabilisierung basierend auf einem Vergleich von Bewegungen des Merkmals in dem ersten und zweiten Abbild bereitzustellen. Die kanalindividuelle elektronische Bildstabilisierung kann somit durch eine kanalindividuelle Bildauswertung der Bewegung von Bilddetails erfolgen.

Alternativ oder zusätzlich zu einem Vergleich in unterschiedlichen Bildern kann auch ein Vergleich des Merkmals innerhalb desselben Bildes erfolgen, insbesondere zu zwei zeitlich beabstandeten Aufnahmen oder Frames. Der optische Bildstabilisator 41 kann ausgebildet sein, um in dem entsprechenden Teilbild zu einem ersten Zeitpunkt und zu einem zweiten Zeitpunkt ein übereinstimmendes Merkmal zu identifizieren, und um die elektronische Bildstabilisierung basierend auf einem Vergleich von Bewegungen des Merkmals in dem ersten Abbild bereitzustellen. Der Vergleich kann bspw. eine Verschiebung angeben, um die das Merkmal durch eine Relativbewegung verschoben wurde und um die das Bild zurückzuschieben ist, um den Bildfehler zumindest teilweise zu korrigieren.

Der optische Bildstabilisator kann genutzt werden, um ein Abbild des abgebildeten Teilgesichtsfeldes eines Referenzkanals, etwa das Abbild im Bildsensorbereich 24a, zu stabilisieren. Das bedeutet, der Referenzkanal kann vollständig optisch stabilisiert werden. Gemäß Ausführungsformen kann eine Mehrzahl von optischen Bildstabilisatoren angeordnet sein, die eine optische Bildstabilisierung für zumindest Gruppen von optischen Kanälen bereitstellen, etwa den optischen Kanal oder optische Kanäle mit einer ersten Brennweite, wie der optische Kanal zur Abbildung des Gesamtgesichtsfeldes und optische Kanäle mit einer zweiten Brennweite, etwa zur Abbildung der Teilgesichtsfelder. Alternativ kann auch eine kanalindividuelle optische Bildstabilisierung vorgesehen sein. Der elektronische Bildstabilisator 41 ist bspw. ausgebildet, um eine Bildstabilisierung kanalindividuell für von dem Referenzkanal verschiedene optische Kanäle, die auf die Bildsensorbereiche 24b und 24c abbilden, auszuführen. Die Multiaperturabbildungsvorrichtung kann ausgebildet sein, um den Referenzkanal ausschließlich optisch zu stabilisieren. Das bedeutet, in einer Ausführungsform kann eine ausreichend gute Bildstabilisierung in dem Referenzkanal erreicht werden, indem allein die mechanisch erzielte optische Bildstabilisierung genutzt wird. Für die anderen Kanäle erfolgt zusätzlich eine elektronische Bildstabilisierung, um den zuvor beschriebenen Effekt einer unzureichenden optischen Bildstabilisierung infolge Brennweitenunterschiede teilweise oder vollständig zu kompensieren, wobei die elektronische Stabilisierung in jedem Kanal individuell erfolgt.

Gemäß einer weiteren Ausführungsform ist es weiterhin möglich, dass jeder Kanal der Multiaperturabbildungsvorrichtung über eine individuelle elektronische Bildstabilisierung verfügt. Die für jeden Kanal der Multiaperturabbildungsvorrichtung individuell, d. h. in eigenem Umfang, durchgeführte elektronische Bildstabilisierung kann dabei derart erfolgen, dass ein festgelegter funktionaler Zusammenhang zwischen den zu realisierenden Bildverschiebungen in den einzelnen Kanälen ausgenutzt wird. Beispielweise beträgt die Verschiebung entlang der Richtung 32 in einem Kanal das 1,1-fache, das 1,007-fache, das 1,3-fachen oder das 2 oder 5-fache der Verschiebung entlang der Richtung 32 in einer anderen Abbildung. Weiterhin kann dieser kanalindividuelle funktionale Zusammenhang von den Relativbewegungen zwischen Strahlumlenkeinheit und/oder Array und/oder Bildsensor abhängen, wobei dieser linear sein kann oder einer Winkelfunktion entsprechen kann, die einen Rotationswinkel der Strahlumlenkeinrichtung auf einen Umfang der elektronischen Bildstabilisierung entlang der Bildrichtung abbildet. Ein identischer Zusammenhang kann mit gleichen oder unterschiedlichen Zahlenwerten für die Richtung 28 erhalten werden.

Für alle Ausführungsformen gilt, das die realisierten Relativbewegungen von entsprechenden zusätzlichen Sensoren, wie Gyroskope u.a., erfasst werden oder von den aufgenommenen Bilddaten eines, mehrerer oder aller Kanäle abgeleitet werden können. Diese Daten oder Informationen können für den optischen und/oder elektronischen Bildstabilisator genutzt werden, das bedeutet, dass die Multiaperturabbildungsvorrichtung bspw. ausgebildet ist, um ein Sensorsignal von einem Sensor zu empfangen, und um das Sensorsignal bezüglich einer Information, die mit einer Relativbewegung zwischen der Multiaperturabbildungsvorrichtung und dem Objekt korreliert ist, auszuwerten, und um eine Ansteuerung des optischen und/oder elektronischen Bildstabilisators unter Verwendung dieser Information auszuführen.

Der optische Bildstabilisator kann ausgebildet sein, um die optische Bildstabilisierung entlang der Bildachsen 28 und 32 durch Bewegung unterschiedlicher Komponenten zu erhalten, etwa des Arrays 14 für die Stabilisierung entlang der Richtung 28 und die Rotation 38 der Strahlumlenkeinrichtung 18 für die Stabilisierung entlang der Richtung 32. In beiden Fällen wirken sich Unterschiede in den Optiken 64a-c aus. Die vorangehenden Ausführungen bezüglich der elektronischen Bildstabilisierung können für beide Relativbewegungen implementiert werden. Insbesondere ermöglicht eine Betrachtung der Richtungen 28 und 32 getrennt voneinander eine Berücksichtigung von unterschiedlichen Abweichungen zwischen den Optiken 64a-c entlang der Richtungen 28 und 32.

Hierin beschriebene Ausführungsbeispiele können eine gemeinsame Bildachse 28 und/oder 32 für die Teilbilder in den Bildsensorbereichen 24a-c nutzen. Alternativ können sich die Richtungen auch unterscheiden und in einander umgerechnet werden.

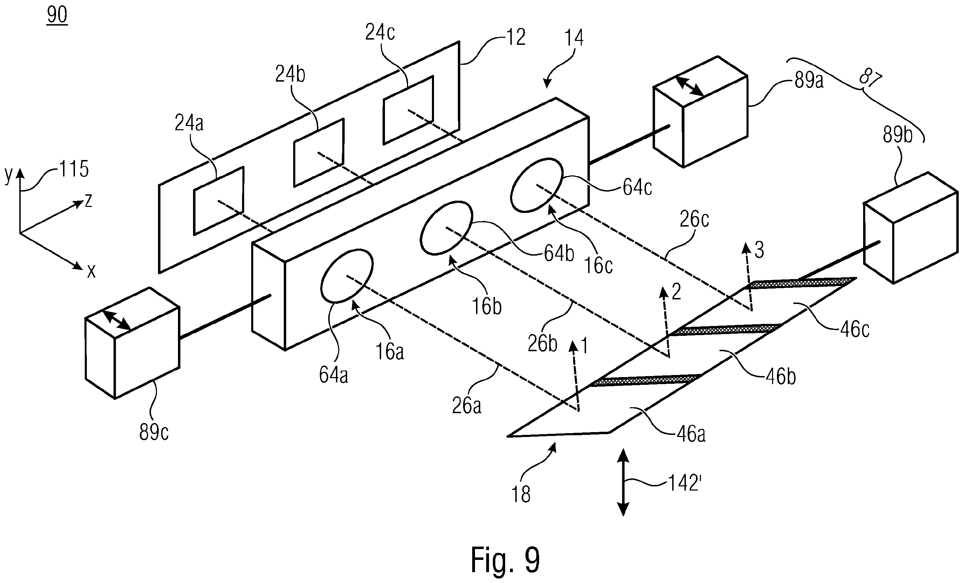

Fig. 9 zeigt eine schematische perspektivische Ansicht einer Multiaperturabbildungsvorrichtung 90 gemäß einem weiteren Ausführungsbeispiel, die eine Fokussiereinrichtung 87 umfasst. Die Fokussiereinrichtung 87 kann einen oder mehrere Aktoren 89a, 89b und/oder 89c umfassen, die ausgebildet sind, um einen Abstand zwischen dem Array 14 und dem Bildsensor 12 und/oder der Strahlumlenkeinrichtung 18 und dem Array 14 und/oder der Strahlumlenkeinrichtung 18 und dem Bildsensor 12 zu verändern, um eine Fokussierung der Abbildungen auf die Bildsensorbereiche 24a, 24b und/oder 24c einzustellen. Obwohl die Optiken 64a, 64b und 64c so dargestellt sind, dass sie an einem gemeinsamen Träger angeordnet sind, um gemeinsam bewegbar zu sein, kann zumindest die Optik 64b, der Bildsensorbereiche 24b und/oder der Strahlumlenkbereich 46b individuell bewegt werden, um eine Fokussierung für den optischen Kanal 16b verschieden von einer Fokussierung in anderen Kanälen einzustellen. Das bedeutet, dass die Fokussiereinrichtung 87 ausgebildet sein kann, um eine Relativbewegung für den ersten und zweiten optischen Kanal 16a und 16c und eine Relativbewegung für den optischen Kanal 16b voneinander verschieden einzustellen.

Die Fokussiereinrichtung 87 ist mit dem optischen Bildstabilisator 22 kombinierbar, das bedeutet, eine Bewegung, die sowohl in dem optischen Bildstabilisator 22 als auch in der Fokussiereinrichtung 87 durch Aktuatoren bereitgestellt wird, kann durch zusätzlich angeordnete Aktuatoren bereitgestellt werden oder auch durch einen gemeinsamen Aktuator, der Bewegungen zwischen Komponenten sowohl zur Fokussierung als auch zur optischen Bildstabilisierung bereitstellt.

In anderen Worten ist eine Verwendung von getrennten Aktuatoren für Autofokus (AF) und gegebenenfalls optische Bildstabilisierung (Optical Image Stabilisation - OIS) vorteilhaft. Aufgrund des möglicherweise ungleichen Aufbaus der benachbarten Kanäle in Bezug auf Auflösung und Brennweite kann eine kanalindividuelle Aktuatorik ermöglichen, eine kanalindividuelle Einstellung zu erhalten, so dass die Vorteile der Autofokussierung und/oder der Bildstabilisierung in allen Kanälen erhalten werden.. So werden beispielsweise für die Funktion des Autofokus bei verschiedenen Brennweiten verschiedene bildseitige Wegstrecken zur Fokussierung benötigt, um diese mit hoher Qualität auszuführen. Alternative Aufbauformen können so ausgeführt sein, dass der optische Kanal, der konfiguriert ist, um das Gesamtgesichtsfeld zu erfassen, ohne eine Strahlumlenkeinrichtung ausgeführt wird.

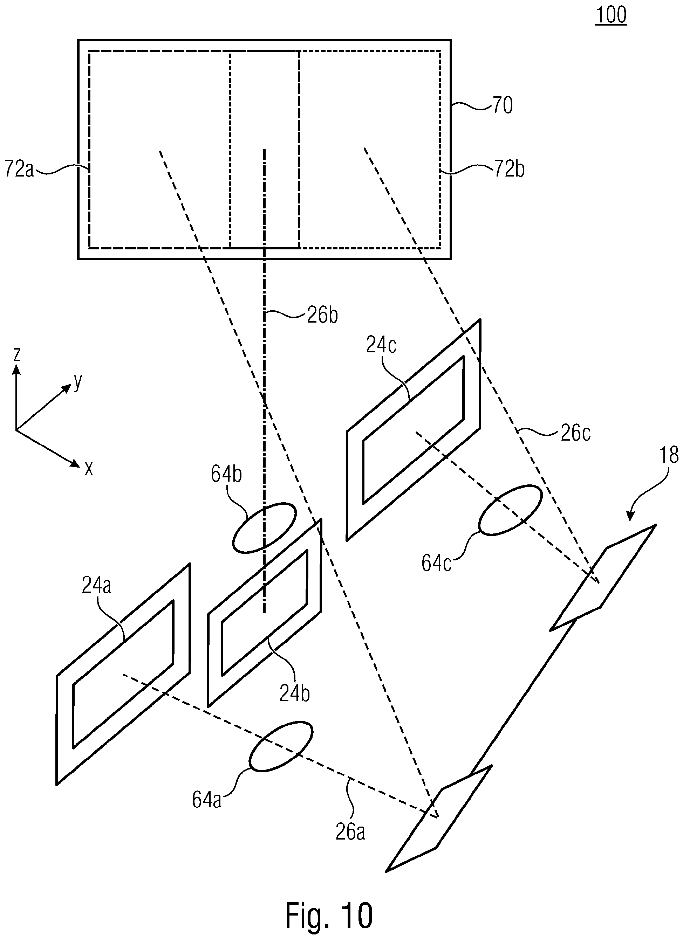

Fig. 10 zeigt eine schematische perspektivische Darstellung einer Multiaperturabbildungsvorrichtung 100 gemäß einem weiteren Ausführungsbeispiel, bei dem die Bildsensorbereiche 24a bis 24c auf zumindest zwei voneinander verschiedenen Chips angeordnet sind und gegeneinander orientiert, d. h., geneigt sind. Der Bildsensorbereichen 24b kann in Kombination mit der Optik 64b eine erste Blickrichtung gegebenenfalls direkt hin zu dem Gesamtgesichtsfeld 70 aufweisen. Die Bildsensorbereiche 24a und 24c können in Kombination mit den ihnen zugeordneten Optiken 64a und 64c eine hiervon verschiedene Blickrichtung aufweisen, beispielsweise senkrecht hierzu entlang einer x-Richtung, wobei die Strahlengänge 26a und 26c von der Strahlumlenkeinrichtung 18 hin zu den Teilgesichtsfeldern 72a und 72b umgelenkt werden. Dies stellt eine gegenüber den vorangehend beschriebenen Multiaperturabbildungsvorrichtungen alternative Aufbauform dar.

Die Verwendung der Strahlumlenkeinrichtung 18 kann zu einer gewissen Spiegelgröße oder Umlenkflächengröße führen, die für den Kanal 24b größer ausfallen kann als für die benachbarten Kanäle zur Erfassung der Teilgesichtsfelder, da der Kanal 16b immerhin das verglichen mit den Teilgesichtsfeldern 72a und 72b größere Gesamtgesichtsfeld zu erfassen hat. Dies kann zu einer Vergrößerung entlang einer Dickenrichtung der Vorrichtung, beispielsweise eine z-Richtung führen, was in manchen Ausführungsformen unerwünscht ist. Die Verwendung der Strahlumlenkeinrichtung 18 kann deshalb so umgestaltet werden, dass lediglich die Strahlengänge 26a und 26c umgelenkt werden, während der Strahlengang 26b direkt, d. h. ohne Umlenkung, hin zu dem Gesamtgesichtsfeld 70 gelenkt wird.

In anderen Worten wird der mittlere Kamerakanal ohne Umlenkspiegel also in klassischer Orientierung direkt aus der Ebene der Vorrichtung, beispielsweise ein Telefon, herausblickend mittig zwischen die beiden umgelenkten Kamerakanäle höherer Auflösung eingebaut. Aufgrund der niedrigeren Auflösung, bspw. ein Wert von 0,77 bzw. 1/1,3, 0,66 bzw. 1/1,5 oder 0,5 bzw. 1/2, was einer oben beschriebenen höheren Auflösung der Zusatzkanäle von zumindest 30 %, zumindest 50 % oder zumindest 100 % entspricht, und entsprechend geringerer Brennweite weist der mittlere Kamerakanal in einer derartig stehenden Konfiguration eine in etwa gleiche Bauhöhe entlang der z-Richtung auf wie die beiden äußeren Kamerakanäle liegend. Diese Lösung kann zwar gegebenenfalls eine Umschaltung der Blickrichtung des mittleren Kanals 16b verhindern, kann aber durch eine möglicherweise weitere Anordnung eines zusätzlichen Kamerakanals kompensiert werden. Die Anordnung einer Autofokusfunktion und/oder einer optischen Bildstabilisierung kann durch individuelle Anordnung von Aktuatoren bereitgestellt werden. Nochmal mit anderen Worten: Ein großes Gesichtsfeld "1" kann mit kurzer Brennweite und/oder geringerer Vergrößerung "aufrecht stehend" abgebildet werden, und ein kleineres Teilgesichtsfeld "2" kann mit längerer Brennweite und/oder stärkerer Vergrößerung "liegend und mit gefaltetem Strahlengang" abgebildet werden und kann die jeweiligen Gegebenheiten am besten angepasst werden. "1" ist bereits kurz ausgeführt, ermöglicht aber ein großes Gesichtsfeld, was jedoch den Spiegel groß machen kann, während "2" lang ausgeführt sein kann und durch das kleinere Gesichtsfeld nur einen kleineren Spiegel erfordert.

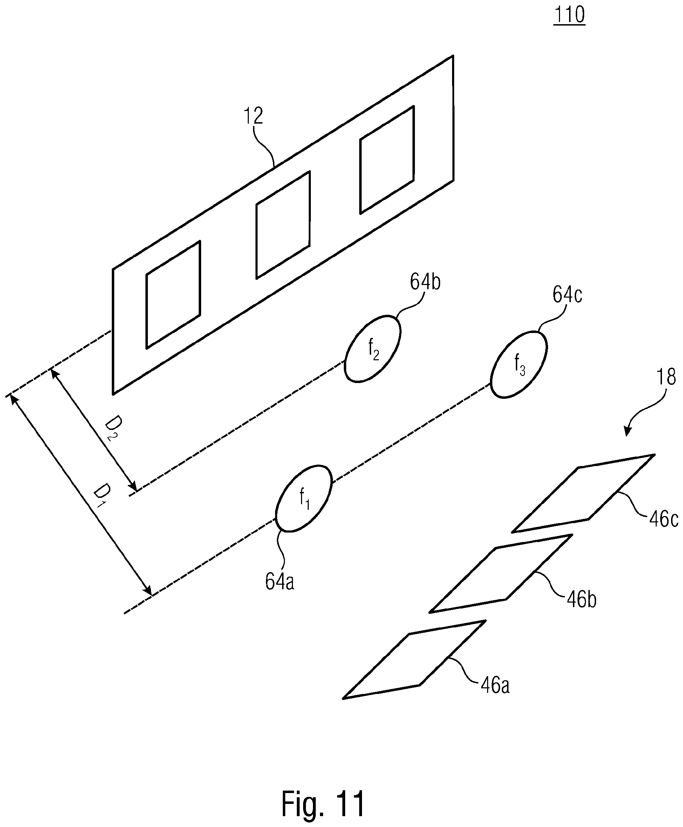

Fig. 11 zeigt eine schematische perspektivische Ansicht einer Multiaperturabbildungsvorrichtung 110 gemäß einem weiteren Ausführungsbeispiel, bei dem ein Abstand d₁ der Optiken 64a und 64c, die die Brennweiten f₁ und f₃ aufweisen, zu dem Bildsensor 12 größer ist als ein Abstand d₂ zwischen der Optik 64b und dem Bildsensor 12, wobei die Optik 64b die Brennweite f₂ aufweist. Der Abstand d₁ und/oder d₂ kann somit an die Brennweite der Optiken 64a-64c angepasst sein. Strahlumlenkbereiche 46a-46c der Strahlumlenkeinrichtung 18 können, wenn die Strahlumlenkeinrichtung 18 angeordnet ist, individuell steuerbar sein.

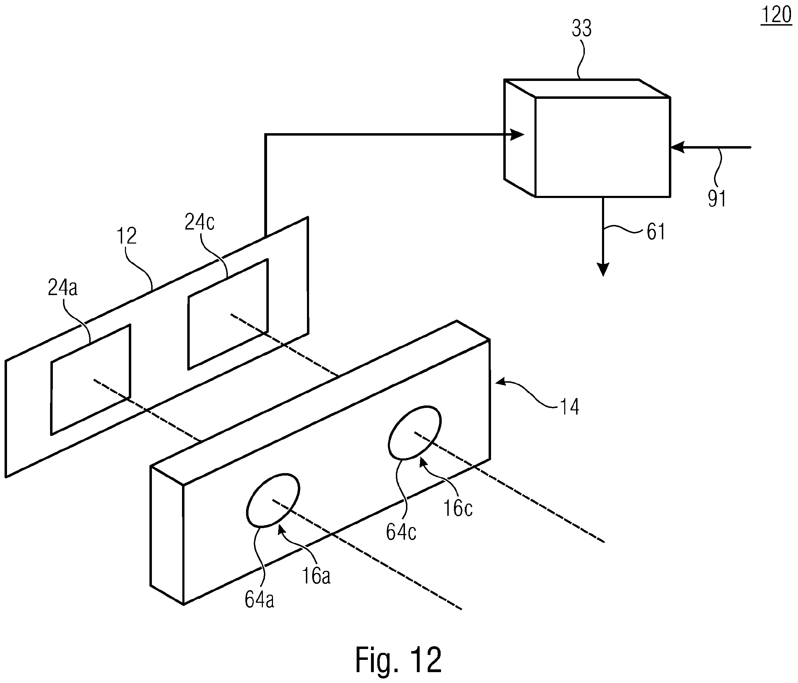

Fig. 12 zeigt eine schematische perspektivische Ansicht einer Vorrichtung 120 gemäß einem weiteren Ausführungsbeispiel. Die Vorrichtung 120 umfasst den Bildsensor 12 umfassend die Bildsensorbereiche 24a und 24c. Die Vorrichtung 120 umfasst ferner das Array 14 mit den optischen Kanälen 16a und 16c. Jeder der optischen Kanäle 16a und 16c weist unverändert die Optik 64a bzw. 64c zur Abbildung eines Teilgesichtsfelds 72a bzw. 72b des Gesamtgesichtsfelds 70 auf, wie es im Zusammenhang mit vorangehend beschriebenen Multiaperturabbildungsvorrichtungen beschrieben ist. Vereinfacht ausgedrückt können der Bildsensor 12 und das Array 14 in Abwesenheit des optischen Kanals zur Abbildung des Gesamtgesichtsfelds ausgeführt sein. Die Vorrichtung 120 umfasst die Berechnungseinheit 33, die ausgebildet ist, um Bildinformationen bezüglich der Teilgesichtsfelder 72a und 72b von dem Bildsensor 12 zu erhalten. Die Berechnungseinheit 33 ist ferner ausgebildet, um ein Signal 91 umfassend eine Bildinformation des Gesamtgesichtsfelds 70 zu erhalten. Die Berechnungseinheit 33 ist ausgebildet, um die Bildinformationen der Teilgesichtsfelder 72a und 72b mit der Bildinformation 91 des Gesamtgesichtsfelds 70 zu kombinieren, um die kombinierte Bildinformation 61 des Gesamtgesichtsfelds 70 zu erhalten.

Vereinfacht ausgedrückt kann die Vorrichtung 120 ein Zusatzmodul für eine bestehende Kameravorrichtung sein und ausgebildet sein, um von der Kameravorrichtung das Bildsignal bezüglich des erfassten Gesamtgesichtsfelds zu erhalten. Hierbei kann es sich um jede Kamera handeln. Die Vorrichtung 120 kann somit ausgebildet sein, um eine Auflösung der externen Vorrichtung zu erhöhen, indem das erhaltene Bildsignal 91 mit zusätzlich erfassten Teilgesichtsfeldern 72a und 72b überlagert wird, um die Qualität zu erhöhen.

Die Berechnungseinheit 33 kann ausgebildet sein, um dieselbe Funktionalität bereitzustellen, wie sie im Zusammenhang mit den hierin beschriebenen Multiaperturabbildungsvorrichtungen beschrieben ist. Das bedeutet, die Vorrichtung 120 kann konfiguriert sein, um die Bildinformation 91 mit einer ersten Bildauflösung zu erhalten, und um die Bildinformation bezüglich der Teilgesichtsfelder 72a und 72b mit einer höheren Auflösung zu erhalten. Die kombinierte Bildinformation 61 kann die höhere Auflösung oder zumindest eine höhere Auflösung als die Auflösung des Bildsignals 91 aufweisen. Die Auflösung des Bildsignals 91 kann entlang einer ersten und zweiten Bildrichtung innerhalb des oben beschriebenen Toleranzbereichs von 20%, 10 % oder 0 % der Auflösung der Bildsensorbereiche 24a und 24c multipliziert mit dem Wert 0,77, 0,66 oder 1/2 entsprechen oder geringer sein.

Die Berechnungseinheit 33 kann ferner ausgebildet sein, um die Bildzuordnung blockweise auszuführen, wie es im Zusammenhang mit der Fig. 5 beschrieben ist. Dies kann auch bedeuten, dass die Berechnungseinheit 33 ein Zuordnungskriterium ausführt, etwa eine Ähnlichkeitsanalyse, einen Kantenvergleich oder dergleichen, und um die Kombination der Blöcke nur auszuführen, wenn das Zuordnungskriterium erfüllt ist. Wenn das Zuordnungskriterium nicht erfüllt ist, kann die kombinierte Bildinformation von der Berechnungseinheit 33 so bereitgestellt werden, dass eine Kombination der Blöcke in dem ausgewerteten Block nicht erfolgt.

Die Berechnungseinheit 33 kann ausgebildet sein, um ein Stitching der Bildinformationen der Teilgesichtsfelder 72a und 72b basierend auf der Bildinformation des Gesamtgesichtsfelds 70 auszuführen. Da lediglich die Bildinformationen ausgewertet werden, kann es für die Berechnungseinheit 33 unerheblich sein, ob die Bildinformation bezüglich des Gesamtgesichtsfelds 70 von dem eigenen Bildsensor 12 oder dem Bildsensor einer externen Vorrichtung erhalten wird.

Wie es für die Multiaperturabbildungsvorrichtungen beschrieben ist, kann die Berechnungseinheit ausgebildet sein, um eine Tiefenkarte für die Bildinformation des Gesamtgesichtsfelds unter Verwendung einer ersten Disparität zwischen einer Blickrichtung des Kanals zur Erfassung des Gesamtgesichtsfelds und einer Abbildung des ersten Teilgesichtsfelds und/oder einer zweiten Disparität zwischen der Abbildung des Gesamtgesichtsfelds und einer Abbildung des zweiten Teilgesichtsfelds zu erstellen. Obwohl das Gesamtgesichtsfeld von einer anderen Kamera aufgenommen wurde, weist es eine Blickrichtung hin zu dem Gesamtgesichtsfeld auf, so dass eine Disparität auswertbar ist, insbesondere, wenn die Vorrichtung gemeinsam mit der das Bildsignal 91 bereitstellenden Vorrichtung kalibriert wird.

Wie es vorangehend beschrieben wurde, kann die Berechnungseinheit 33 ausgebildet sein, um die Tiefenkarte in einem Überlappbereich der Teilbilder der Teilgesichtsfelder 72a und 72b durch ausschließliche Verwendung der Bildinformationen der Teilgesichtsfelder erstellen.

Die Vorrichtung 120 kann einen optischen Bildstabilisator, etwa den optischen Bildstabilisator 22 aufweisen, der ausgebildet ist, um durch Erzeugen einer Relativbewegung zwischen dem Bildsensor 12 und dem Array 14 entlang einer ersten und einer zweiten Richtung, beispielsweise entlang der Bildrichtungen 28 und 32 die optische Bildstabilisierung bereitzustellen. Alternativ oder zusätzlich kann die Vorrichtung 120 eine Fokussiereinrichtung, etwa die Fokussiereinrichtung 87 umfassen, um einen Fokus der Vorrichtung 120 einzustellen. Dies kann durch Erzeugen einer Relativbewegung zwischen zumindest einer der Optiken 64a und 64b der optischen Kanäle 16a und 16b und dem Bildsensor 12 erfolgen.

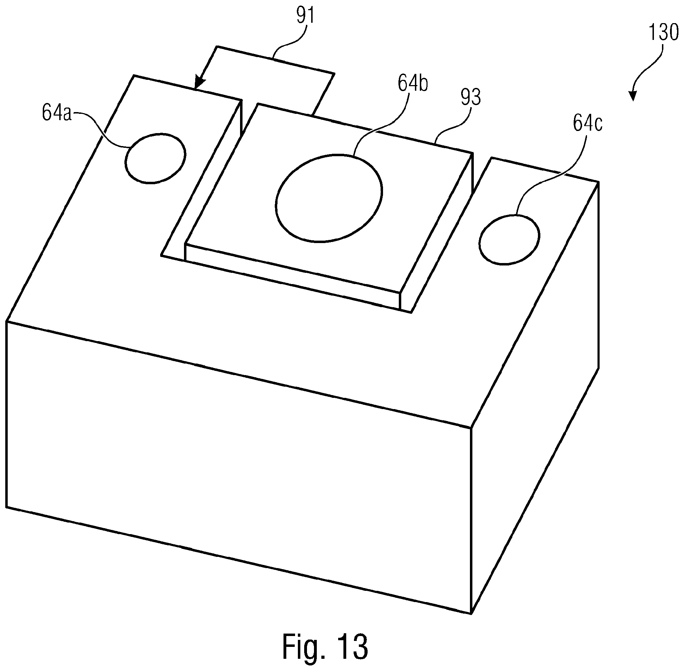

Fig. 13 zeigt eine schematische perspektivische Ansicht einer Ergänzungsvorrichtung 130 gemäß einem Ausführungsbeispiel. Die Ergänzungsvorrichtung 130 ist konfiguriert, um eine Kamera oder Bilderfassungsvorrichtung 93 zu ergänzen, wobei die Kamera oder Bilderzeugungsvorrichtung 93 ausgebildet ist, um das Bildsignal 91 zu erzeugen und der Ergänzungsvorrichtung 130 bereitzustellen. Die Ergänzungsvorrichtung 130 umfasst beispielsweise die Vorrichtung 120 und ist ausgebildet, um mit der Kamera 93 gekoppelt zu werden. Die Ergänzungsvorrichtung 130 ist somit konfiguriert, um die Bildverarbeitung der Kamera 93 zu erweitern oder zu ergänzen. Dies kann auch als eine Add-On-Vorrichtung verstanden werden, die beispielsweise ein Paar aus äußeren Kanälen als Auflösungs-Verstärker (Resolution-Boost) einem bestehenden System zur Verfügung stellt. Das bedeutet, der vorangehend beschriebene mittlere Kanal kann ein herkömmliches Kameramodul sein, das der Hersteller bspw. eines Mobiltelefons kennt und versteht und für den es eine etablierte Supply-Chain (Lieferkette) gibt. Die äußeren Kanäle mit den Optiken 64a und 64c sind ein Zusatzmodul, das neben oder um dieses herum aufgebaut wird. Es kann ein gefalteter Strahlengang verbleiben, die Bauhöhe passt sich somit dem alten Kameramodul an. Zwar wird eine Bauhöhe des Gesamtsystems nicht dünner als das Kameramodul 93, jedoch kann eine Erhöhung der Bauhöhe durch die Erhöhung der Auflösung durch das Zusatzmodul ebenso vermieden werden. Stattdessen haben die äußeren Kanäle zusammen eine größere Sensorfläche als das innere Modul. Wenn die Pixel gleich groß sind, hat das Modul damit eine höhere Gesamtauflösung und daher eine feinere Winkelauflösung. Daher lässt es sich zur Auflösungserhöhung verglichen mit der Kamera 93 benutzen. Auch hier sind die Sensoren in Ausführungsformen ohne Farbfilter ausführbar. Das bedeutet, die Bildinformationen der abgebildeten ersten und zweiten Teilgesichtsfelder können mit einer farbeinheitlichen Luminanzinformation bereitgestellt werden. Das Zusatzmodul kann, muss aber nicht notwendigerweise symmetrisch um das Kameramodul der Kamera 93 herum aufgebaut werden. Andere Aufbauformen, wie etwa diagonal oder asymmetrisch, sind ebenfalls vorstellbar und können über die Bildverarbeitung kompensiert werden. Tiefenkarten können unverändert generiert werden, eine optische und/oder elektronische Bildstabilisierung sowie ein Autofokus können vorgesehen sein.

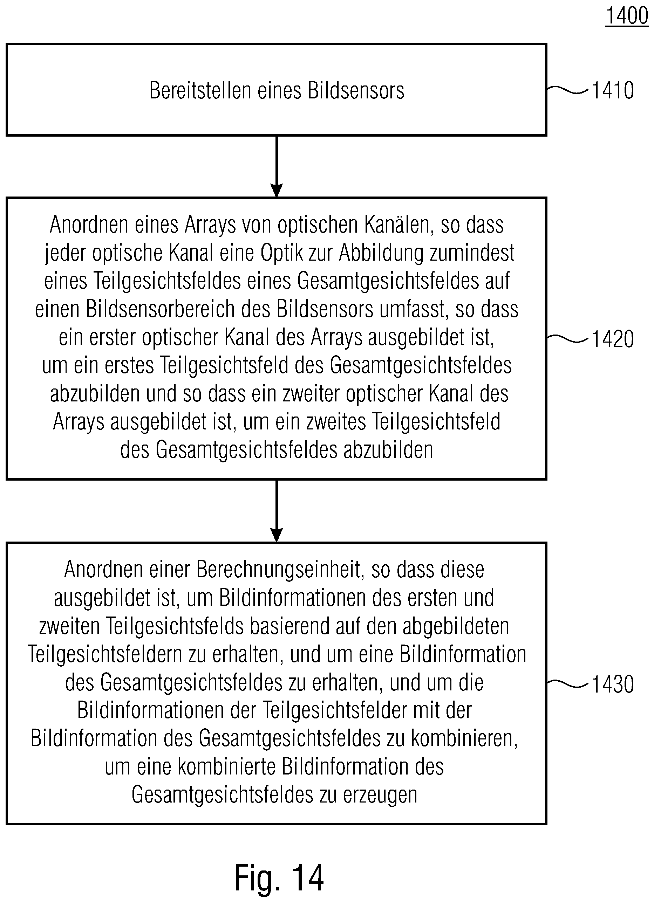

Fig. 14 zeigt ein schematisches Ablaufdiagramm eines Verfahrens 1400 zum Bereitstellen einer Vorrichtung gemäß einem Ausführungsbeispiel, etwa der Vorrichtung 120. In einem Schritt 1410 erfolgt ein Bereitstellen eines Bildsensors. In einem Schritt 1420 erfolgt ein Anordnen eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, so dass ein erster optischer Kanal des Arrays ausgebildet ist, um ein erstes Teilgesichtsfeld des Gesamtgesichtsfeldes abzubilden und so dass ein zweiter optischer Kanal des Arrays ausgebildet ist, um ein zweites Teilgesichtsfeld des Gesamtgesichtsfeldes abzubilden. In einem Schritt 1430 erfolgt ein Anordnen einer Berechnungseinheit, so dass diese ausgebildet ist, um Bildinformationen des ersten und zweiten Teilgesichtsfelds basierend auf den abgebildeten Teilgesichtsfeldern zu erhalten, und um eine Bildinformation des Gesamtgesichtsfeldes zu erhalten, und um die Bildinformationen der Teilgesichtsfelder mit der Bildinformation des Gesamtgesichtsfeldes zu kombinieren, um eine kombinierte Bildinformation des Gesamtgesichtsfeldes zu erzeugen.

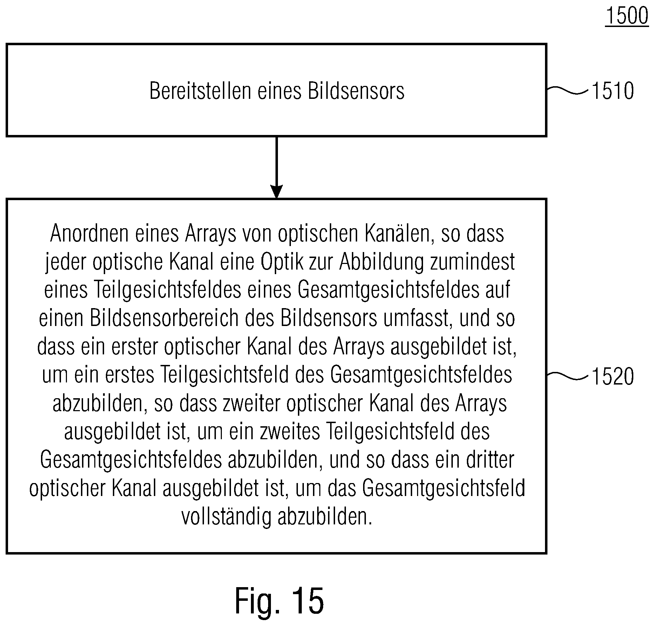

Fig. 15 zeigt ein schematisches Ablaufdiagramm eines Verfahrens 1500 zum Bereitstellen einer Multiaperturabbildungsvorrichtung gemäß einem Ausführungsbeispiel, etwa der Multiaperturabbildungsvorrichtung 10. In einem Schritt 1510 erfolgt ein Bereitstellen eines Bildsensors. In einem Schritt 1520 erfolgt ein Anordnen eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, und so dass ein erster optischer Kanal des Arrays ausgebildet ist, um ein erstes Teilgesichtsfeld des Gesamtgesichtsfeldes abzubilden, so dass ein zweiter optischer Kanal des Arrays ausgebildet ist, um ein zweites Teilgesichtsfeld des Gesamtgesichtsfeldes abzubilden, und so dass ein dritter optischer Kanal ausgebildet ist, um das Gesamtgesichtsfeld vollständig abzubilden.

Die hierin beschriebenen Ausführungsformen liefern den Vorteil, dass ein niedrigaufgelöstes Bild immer noch prior zur Unterstützung des Stitchings der hochaufgelösten Bilder verwendet wird, um den Stitching-Prozess zu vereinfachen. Dies ermöglicht geringere Verdeckungen in der Tiefenkarte durch die mittige Referenzkamera und symmetrische Anordnung der anderen Kanäle um diese. Dies resultiert auch in weniger Artefakten im finalen kombinierten Bild. Eine Live-View kann ohne Rechenaufwand direkt aus dem mittleren Kanal, gegebenenfalls unter Verwendung von Binning oder Überspringen von Pixeln erhalten werden, um die Auflösung soweit wie nötig zu reduzieren, aber das vollständige Gesichtsfeld im richtigen Aspektverhältnis ist bereits aus dem mittleren Kanal erhaltbar, da dieser das gesamte FOV abdeckt. Ein Video kann ohne Rechenaufwand direkt aus dem mittleren Kanal hergeleitet werden, was analog zu dem Ableiten von Bildern erfolgt. Die Verwendung lediglich dreier Kanäle, d. h., eine Gruppe von optischen Kanälen zum Erfassen der Teilgesichtsfelder umfasst optische Kanäle zum Erfassen genau zweier Teilgesichtsfelder, ermöglicht eine geringer Anzahl von Bauteilen, weniger Sensoren, eine geringe Datenübertragungs-Bandbreite und ein geringes Volumen der Vorrichtung oder Multiaperturabbildungsvorrichtung.

Hierin beschriebene Ausführungsbeispiele können als oder in Multiaperturabbildungssystemen mit linearer Kanalanordnung und kleinster Baugröße verwendet werden und die hierin beschriebenen Vorteile gegenüber bekannten Lösungen bieten.

Manche Ausführungen beziehen sich auf relative Richtungen wie oben/unten oder links/rechts. Es versteht sich, dass diese beliebig mit einander vertauschbar sind, wenn eine Orientierung im Raum verändert wird. Deshalb sollen diese Begriffe nicht einschränkend wirken und lediglich der besseren Verständlichkeit dienen.

Im Folgenden werden zusätzliche Ausführungsbeispiele und Aspekte der Erfindung beschrieben, die einzeln oder in Kombination mit beliebigen der hierin beschriebenen Merkmale, Funktionalitäten und Einzelheiten verwendet werden können.

Gemäß einem ersten Ausführungsbeispiel weist eine Vorrichtung folgendes auf: einen Bildsensor 12; ein Array 14 von optischen Kanälen 16a-b, wobei jeder optische Kanal 16a-b eine Optik 64a-b zur Abbildung eines Teilgesichtsfeldes 72a-b eines Gesamtgesichtsfeldes 70 auf einen Bildsensorbereich 24a-b des Bildsensors 12 umfasst, wobei ein erster optischer Kanal 16a des Arrays 14 ausgebildet ist, um ein erstes Teilgesichtsfeld 72a des Gesamtgesichtsfeldes 70 abzubilden und wobei ein zweiter optischer Kanal 16b des Arrays 14 ausgebildet ist, um ein zweites Teilgesichtsfeld 72b des Gesamtgesichtsfeldes 70 abzubilden; und eine Berechnungseinheit 33, die ausgebildet ist, um Bildinformationen des ersten und zweiten Teilgesichtsfelds basierend auf den abgebildeten Teilgesichtsfeldern 72a-b zu erhalten, und um eine Bildinformation des Gesamtgesichtsfeldes 70 zu erhalten, und um die Bildinformationen der Teilgesichtsfelder mit der Bildinformation des Gesamtgesichtsfeldes zu kombinieren, um eine kombinierte Bildinformation 61 des Gesamtgesichtsfeldes zu erzeugen.

Gemäß einem zweiten Ausführungsbeispiel unter Bezugnahme auf das erste Ausführungsbeispiel sind der der erste und der zweite optische Kanal 16a-b Teil einer Gruppe von optischen Kanälen, die ausgebildet sind, um jeweils ein Teilgesichtsfeld 72a-b des Gesamtgesichtsfeldes 70 abzubilden, wobei die Gruppe von optischen Kanälen ausgebildet ist, um gemeinsam das Gesamtgesichtsfeld 70 vollständig abzubilden.

Gemäß einem dritten Ausführungsbeispiel unter Bezugnahme auf das zweite Ausführungsbeispiel ist die Gruppe von optischen Kanälen zum Erfassen genau zweier Teilgesichtsfelder 72a-b ausgebildet.

Gemäß einem vierten Ausführungsbeispiel unter Bezugnahme auf eines der vorangehenden Ausführungsbeispiele weisen ein erstes Teilbild und ein zweites Teilbild, welche die Bildinformationen des ersten und zweiten Teilgesichtsfeldes repräsentieren, entlang einer ersten Bildrichtung 32 eine gleiche Abmessung auf wie ein Gesamtbild, welches die Bildinformation des Gesamtgesichtsfeldes 70 repräsentiert, und weisen entlang einer zweiten Bildrichtung 28 eine unterschiedliche Abmessung verglichen mit dem Gesamtbild auf.

Gemäß einem fünften Ausführungsbeispiel unter Bezugnahme auf eines der vorangehenden Ausführungsbeispiele ist die Vorrichtung ausgebildet, um die Bildinformationen des abgebildeten ersten und zweiten Teilgesichtsfeldes mit einer farbeinheitlichen Luminanzinformation bereitzustellen.

Gemäß einem sechsten Ausführungsbeispiel unter Bezugnahme auf eines der vorangehenden Ausführungsbeispiele ist die Vorrichtung konfiguriert, um die Bildinformation des Gesamtgesichtsfeldes 70 mit einem ersten Abtastgrad b x c zu erhalten, um die Bildinformationen des ersten oder des zweiten Teilgesichtsfeldes 72a-b mit einem zweiten Abtastgrad b x a zu erhalten, der größer ist als der erste Abtastgrad b x c, und um die kombinierte Bildinformation des Gesamtgesichtsfeldes 70 mit einem dritten Abtastgrad bereitzustellen, der größer ist als der erste Abtastgrad.

Gemäß einem siebten Ausführungsbeispiel unter Bezugnahme auf das sechste Ausführungsbeispiel ist der zweite Abtastgrad b x c entlang einer ersten und einer zweiten Bildrichtung 28, 32 um zumindest 30 % größer, als der erste Abtastgrad.

Gemäß einem achten Ausführungsbeispiel unter Bezugnahme auf eines der vorangehenden Ausführungsbeispiele ist die Berechnungseinheit 33 ausgebildet, die Bildinformation des Gesamtgesichtsfeldes 70 und die Bildinformationen der Teilgesichtsfelder in Bildblöcke 63a, 63b zu unterteilen, und um blockweise eine in einem ersten Bildblock 63c des Gesamtgesichtsfeldes enthaltene Bildinformation x, *, # einer übereinstimmenden Bildinformation eines zweiten Bildblocks 63a, 63b des ersten oder zweiten Teilgesichtsfeldes zuzuordnen, um durch Kombination des ersten und zweiten Bildblocks einen Abtastgrad der Bildinformation des Gesamtgesichtsfeldes 70 in der kombinierten Bildinformation zu erhöhen.

Gemäß einem neunten Ausführungsbeispiel unter Bezugnahme auf das achte Ausführungsbeispiel ist die Berechnungseinheit 33 ausgebildet, um den ersten Block 63c dem zweiten Block 63a, 63b unter Anwendung eines Zuordnungskriteriums zuzuordnen, um die Kombination nur auszuführen, wenn das Zuordnungskriterium erfüllt ist, und um die kombinierte Bildinformation 61 des Gesamtgesichtsfeldes 70 in dem ersten Block 63c₄ ohne eine Kombination bereitzustellen, wenn das Zuordnungskriterium nicht erfüllt ist.

Gemäß einem zehnten Ausführungsbeispiel unter Bezugnahme auf eines der vorangehenden Ausführungsbeispiele ist die Berechnungseinheit 33 ausgebildet, um ein Stitching der Bildinformationen der Teilgesichtsfelder 72a-b basierend auf der Bildinformation des Gesamtgesichtsfeldes 70 auszuführen.

Gemäß einem elften Ausführungsbeispiel unter Bezugnahme auf eines der vorangehenden Ausführungsbeispiele ist die Berechnungseinheit 33 ausgebildet, um eine Tiefenkarte für die Bildinformation des Gesamtgesichtsfeldes 70 unter Verwendung einer ersten Disparität 83a zwischen einer Abbildung des Gesamtgesichtsfeldes 70 und einer Abbildung des ersten Teilgesichtsfeldes 72a und einer zweiten Disparität 83b zwischen der Abbildung des Gesamtgesichtsfeldes 70 und einer Abbildung des zweiten Teilgesichtsfeldes 72b zu erstellen.

Gemäß einem zwölften Ausführungsbeispiel unter Bezugnahme auf eines der vorangehenden Ausführungsbeispiele überlappen die Teilgesichtsfelder 72a-b in einem Überlappbereich 73; 73a-e in dem Gesamtgesichtsfeld 70, wobei die Berechnungseinheit 33 ausgebildet ist, um eine Tiefenkarte für die Bildinformation des Gesamtgesichtsfeldes 70 im Überlappbereich 73; 73a-e unter Verwendung der Bildinformationen des ersten und zweiten Teilgesichtsfeldes 72a-b zu erstellen.

Gemäß einem dreizehnten Ausführungsbeispiel unter Bezugnahme auf eines der vorangehenden Ausführungsbeispiele weist die Vorrichtung einen optischen Bildstabilisator 22 auf zur Bildstabilisierung entlang einer ersten Bildachse 28 durch Erzeugen einer ersten Relativbewegung 34; 39a zwischen dem Bildsensor 12 und dem Array 14 und zur Bildstabilisierung entlang einer zweiten Bildachse 32 durch Erzeugen einer zweiten Relativbewegung 38; 39b zwischen dem Bildsensor 12 und dem Array 14.

Gemäß einem vierzehnten Ausführungsbeispiel unter Bezugnahme auf eines der vorangehenden Ausführungsbeispiele umfasst die Vorrichtung ferner eine Fokussiereinrichtung umfassend zumindest einen Aktor 134b zum Einstellen eines Fokus der Vorrichtung, der ausgebildet ist, um eine Relativbewegung zwischen zumindest einer Optik 64a-b eines der optischen Kanäle 16a-b und dem Bildsensor 12 bereitzustellen.

Gemäß einem fünfzehnten Ausführungsbeispiel weist eine Ergänzungsvorrichtung eine Vorrichtung gemäß einem des ersten bis vierzehnten Ausführungsbeispiels auf, die konfiguriert ist, um mit einer Kamera gekoppelt zu werden, um von dieser die Bildinformation des Gesamtgesichtsfeldes 70 zu erhalten.

Gemäß einem sechzehnten Ausführungsbeispiel weist eine Multiaperturabbildungsvorrichtung 10; 30; 60; 70; 80; 90 folgende Merkmale auf: einen Bildsensor 12; und ein Array 14 von optischen Kanälen 16a-c, wobei jeder optische Kanal 16a-c eine Optik 64a-c zur Abbildung zumindest eines Teilgesichtsfeldes 72a-b eines Gesamtgesichtsfeldes 70 auf einen Bildsensorbereich 24a-c des Bildsensors 12 umfasst; wobei ein erster optischer Kanal 16a des Arrays 14 ausgebildet ist, um ein erstes Teilgesichtsfeld 72a des Gesamtgesichtsfeldes 70 abzubilden, wobei ein zweiter optischer Kanal 16b des Arrays 14 ausgebildet ist, um ein zweites Teilgesichtsfeld 72b des Gesamtgesichtsfeldes 70 abzubilden, und wobei ein dritter optischer Kanal 16c ausgebildet ist, um das Gesamtgesichtsfeld 70 vollständig abzubilden.

Gemäß einem siebzehnten Ausführungsbeispiel unter Bezugnahme auf das sechzehnte Ausführungsbeispiel umfasst die Multiaperturabbildungsvorrichtung eine Strahlumlenkeinrichtung 18 zum gemeinsamen Umlenken eines Strahlengangs 26a-b des ersten und zweiten optischen Kanals 16a-b.

Gemäß einem achtzehnten Ausführungsbeispiel unter Bezugnahme auf das sechzehnte oder siebzehnte Ausführungsbeispiel ist eine Anordnung von Optiken 64a, 64c zur Erfassung des ersten und des zweiten Teilgesichtsfelds in dem Array 14 bezogen auf einen Ort der Optik 64b zur Abbildung des Gesamtgesichtsfeldes 70 symmetrisch; oder eine Anordnung von Bildsensorbereichen 24a, 24c zur Abbildung des ersten und zweiten Teilgesichtsfelds 72a-b bezogen auf einen Ort des Bildsensorbereichs 24b zur Abbildung des Gesamtgesichtsfeldes 70 ist symmetrisch.

Gemäß einem neunzehnten Ausführungsbeispiel unter Bezugnahme auf eines des sechzehnten bis achtzehnten Ausführungsbeispiels entspricht ein Bildformat des Gesamtgesichtsfeldes 70 einer redundanzfreien Kombination des abgebildeten ersten Teilgesichtsfeldes 72a und des abgebildeten zweiten Teilgesichtsfeldes 72b.

Gemäß einem zwanzigsten Ausführungsbeispiel unter Bezugnahme auf eines des sechzehnten bis neunzehnten Ausführungsbeispiels umfasst die Multiaperturabbildungsvorrichtung eine Berechnungseinheit 33, die ausgebildet ist, um Bildinformationen des ersten und zweiten Teilgesichtsfelds basierend auf den abgebildeten Teilgesichtsfeldern 72a-b zu erhalten, und um eine Bildinformation des Gesamtgesichtsfeldes 70 basierend auf dem abgebildeten Gesamtgesichtsfeld 70 zu erhalten, und um die Bildinformationen der Teilgesichtsfelder mit der Bildinformation des Gesamtgesichtsfeldes 70 zu kombinieren, um eine kombinierte Bildinformation 61 des Gesamtgesichtsfeldes 70 zu erzeugen.

Gemäß einem einundzwanzigsten Ausführungsbeispiel unter Bezugnahme auf das zwanzigste Ausführungsbeispiel ist die Berechnungseinheit 33 ausgebildet, um die Bildinformation des Gesamtgesichtsfeldes 70 und die Bildinformationen der Teilgesichtsfelder in Bildblöcke zu unterteilen, und um blockweise eine in einem ersten Bildblock des Gesamtgesichtsfeldes 70 enthaltene Bildinformation einer übereinstimmenden Bildinformation eines zweiten Bildblocks des ersten oder zweiten Teilgesichtsfeldes zuzuordnen, um durch Kombination des ersten und zweiten Bildblocks einen Abtastgrad der Bildinformation des Gesamtgesichtsfeldes 70 in der kombinierten Bildinformation zu erhöhen.

Gemäß einem zweiundzwanzigsten Ausführungsbeispiel unter Bezugnahme auf das einundzwanzigste Ausführungsbeispiel ist die Berechnungseinheit 33 ausgebildet, um den ersten Block dem zweiten Block unter Anwendung eines Zuordnungskriteriums zuzuordnen, um die Kombination nur auszuführen, wenn das Zuordnungskriterium erfüllt ist, und um die kombinierte Bildinformation des Gesamtgesichtsfeldes 70 in dem ersten Block ohne eine Kombination bereitzustellen, wenn das Zuordnungskriterium nicht erfüllt ist.

Gemäß einem dreiundzwanzigsten Ausführungsbeispiel unter Bezugnahme auf eines des zwanzigsten bis zweiundzwanzigsten Ausführungsbeispiels ist die Berechnungseinheit 33 ausgebildet, um ein Stitching der Bildinformationen der Teilgesichtsfelder basierend auf der Bildinformation des Gesamtgesichtsfeldes 70 auszuführen.

Gemäß einem vierundzwanzigsten Ausführungsbeispiel unter Bezugnahme auf eines des zwanzigsten bis dreiundzwanzigsten Ausführungsbeispiels ist die Berechnungseinheit 33 ausgebildet, um eine Tiefenkarte 81 für die Bildinformation des Gesamtgesichtsfeldes 70 unter Verwendung einer ersten Disparität 83a zwischen einer Abbildung des Gesamtgesichtsfeldes 70 und einer Abbildung des ersten Teilgesichtsfeldes und einer zweiten Disparität 83b zwischen der Abbildung des Gesamtgesichtsfeldes 70 und einer Abbildung des zweiten Teilgesichtsfeldes zu erstellen.

Gemäß einem fünfundzwanzigsten Ausführungsbeispiel unter Bezugnahme auf eines des zwanzigsten bis vierundzwanzigsten Ausführungsbeispiels überlappen die Teilgesichtsfelder in einem Überlappbereich in dem Gesamtgesichtsfeld 70, wobei die Berechnungseinheit 33 ausgebildet ist, um eine Tiefenkarte für die Bildinformation des Gesamtgesichtsfeldes 70 im Überlappbereich unter Verwendung der Bildinformationen des ersten und zweiten Teilgesichtsfeldes zu erstellen.

Gemäß einem sechsundzwanzigsten Ausführungsbeispiel unter Bezugnahme auf eines des zwanzigsten bis fünfundzwanzigsten Ausführungsbeispiels ist die Multiaperturabbildungsvorrichtung konfiguriert, um eine Bildinformation des Gesamtgesichtsfeldes 70 mit einem ersten Abtastgrad von dem Bildsensor zu erhalten, um die Bildinformationen des ersten oder des zweiten Teilgesichtsfeldes mit einem zweiten Abtastgrad von dem Bildsensor zu erhalten, der größer ist als der erste Abtastgrad, und um die kombinierte Bildinformation des Gesamtgesichtsfeldes 70 mit einem dritten Abtastgrad bereitzustellen, der größer ist als der erste Abtastgrad.

Gemäß einem siebenundzwanzigsten Ausführungsbeispiel unter Bezugnahme auf das sechsundzwanzigste Ausführungsbeispiel ist der zweite Abtastgrad entlang einer ersten und einer zweiten Bildrichtung zumindest 30 % größer als der erste Abtastgrad.

Gemäß einem achtundzwanzigsten Ausführungsbeispiel unter Bezugnahme auf eines des sechzehnten bis siebenundzwanzigsten Ausführungsbeispiels ist die Multiaperturabbildungsvorrichtung ausgebildet, um eine Bildinformation des von dem dritten optischen Kanals erfassten Gesamtgesichtsfeldes 70 von dem Bildsensor mit einer ersten Bildauflösung zu erhalten, wobei die Multiaperturabbildungsvorrichtung eine Anzeigeeinrichtung umfasst und ausgebildet ist, um die Bildinformation mit höchstens der ersten Bildauflösung anzuzeigen.

Gemäß einem neunundzwanzigsten Ausführungsbeispiel unter Bezugnahme auf das achtundzwanzigste Ausführungsbeispiel ist die Multiaperturabbildungsvorrichtung ausgebildet, um basierend auf aufeinander folgenden Bildern des Gesamtgesichtsfeldes 70 ein Videosignal des Gesamtgesichtsfeldes 70 auf der Anzeigeeinrichtung auszugeben.

Gemäß einem dreißigsten Ausführungsbeispiel unter Bezugnahme auf eines des sechzehnten bis neunundzwanzigsten Ausführungsbeispiels umfasst die Multiaperturabbildungsvorrichtung eine Strahlumlenkeinrichtung 18 zum gemeinsamen Umlenken eines Strahlengangs 26a-c der optischen Kanäle 16a-c und einen optischen Bildstabilisator 22 zur Bildstabilisierung entlang einer ersten Bildachse 28 durch Erzeugen einer ersten Relativbewegung zwischen dem Bildsensor 12, dem Array 14 und der Strahlumlenkeinrichtung 18 und zur Bildstabilisierung entlang einer zweiten Bildachse 32 durch Erzeugen einer zweiten Relativbewegung 38 zwischen dem Bildsensor 12, dem Array 14 und der Strahlumlenkeinrichtung 18.

Gemäß einem einunddreißigsten Ausführungsbeispiel unter Bezugnahme auf das dreißigste Ausführungsbeispiel ist der optische Bildstabilisator 22 ausgebildet, um eine erste Relativbewegung für den ersten und zweiten optischen Kanal und eine zweite Relativbewegung für den dritten optischen Kanal bereitzustellen.

Gemäß einem zweiunddreißigsten Ausführungsbeispiel unter Bezugnahme auf das dreißigste oder einunddreißigste Ausführungsbeispiel umfasst die erste Relativbewegung zumindest eines aus einer translatorischen Relativbewegung zwischen dem Bildsensor 12 und dem Array 14, einer translatorischen Relativbewegung zwischen dem Bildsensor 12 und der Strahlumlenkeinrichtung 18 und einer translatorischen Relativbewegung zwischen dem Array 14 und der Strahlumlenkeinrichtung 18, und die zweite Relativbewegung 38 umfasst zumindest eines aus einer Rotationsbewegung der Strahlumlenkeinrichtung 18, einer translatorischen Relativbewegung zwischen dem Bildsensor 12 und dem Array 14 und einer translatorischen Relativbewegung zwischen dem Array 14 und der Strahlumlenkeinrichtung 18.

Gemäß einem dreiunddreißigsten Ausführungsbeispiel unter Bezugnahme auf eines des dreißigsten bis zweiunddreißigsten Ausführungsbeispiels weist die Multiaperturabbildungsvorrichtung ferner einen elektronischen Bildstabilisator 41 zur Bildstabilisierung des ersten optischen Kanals 16a des Arrays 14 entlang der ersten und der zweiten Bildachse 28, 32.

Gemäß einem vierunddreißigsten Ausführungsbeispiel unter Bezugnahme auf das dreiunddreißigste Ausführungsbeispiel ist der elektronische Bildstabilisator 41 ausgebildet, um den ersten optischen Kanal 16a in einem ersten Umfang entlang der ersten und der zweiten Bildachse 28, 32 zu stabilisieren und ferner zur Bildstabilisierung des zweiten optischen Kanals 16c in einem zweiten Umfang entlang der ersten und der zweiten Bildachse 28, 32 ausgebildet ist.

Gemäß einem fünfunddreißigsten Ausführungsbeispiel unter Bezugnahme auf das dreiunddreißigste oder vierunddreißigste Ausführungsbeispiel ist der optische Bildstabilisator 22 ausgebildet, um die optische Bildstabilisierung so auszuführen, dass die optische Bildstabilisierung bezogen auf ein Abbild eines ersten der Teilgesichtsfelder 72a-b ist, wobei der elektronische Bildstabilisator 41 ausgebildet ist, um ein Abbild eines zweiten Teilgesichtsfeldes 72a-b bezogen auf das Abbild des ersten Teilgesichtsfeldes 72a-b zu stabilisieren.

Gemäß einem sechsunddreißigsten Ausführungsbeispiel unter Bezugnahme auf eines des dreiunddreißigsten bis fünfunddreißigsten Ausführungsbeispiels ist der optische Bildstabilisator 22 ausgebildet, um ein Abbild des abgebildeten Teilgesichtsfeldes 72a-b eines Referenzkanals aus einer Gruppe umfassend den ersten optischen Kanal 16a und den zweiten optischen Kanal 16c zu stabilisieren, und der elektronische Bildstabilisator 41 ist ausgebildet, um eine Bildstabilisierung kanalindividuell für von dem Referenzkanal verschiedene optische Kanäle 16a-c auszuführen, wobei die Multiaperturabbildungsvorrichtung ausgebildet ist, um den Referenzkanal ausschließlich optisch zu stabilisieren.

Gemäß einem siebenunddreißigsten Ausführungsbeispiel unter Bezugnahme auf eines des dreiunddreißigsten bis sechsunddreißigsten Ausführungsbeispiels ist der elektronische Bildstabilisator 41 ausgebildet, um eine Bildstabilisierung kanalindividuell für jeden optischen Kanal 16a-c auszuführen.

Gemäß einem achtunddreißigsten Ausführungsbeispiel unter Bezugnahme auf das siebenunddreißigste Ausführungsbeispiel ist der elektronische Bildstabilisator 41 ausgebildet, um die kanalindividuelle elektronische Bildstabilisierung in jedem Kanal nach einem festgelegten funktionellen Zusammenhang auszuführen, der von den Relativbewegungen zwischen dem Bildsensor 12, dem Array 14 und der Strahlumlenkeinrichtung 18 abhängt.

Gemäß einem neununddreißigsten Ausführungsbeispiel unter Bezugnahme auf das achtunddreißigste Ausführungsbeispiel ist der funktionelle Zusammenhang eine lineare Funktion.

Gemäß einem vierzigsten Ausführungsbeispiel unter Bezugnahme auf eines des dreiunddreißigsten bis neununddreißigsten Ausführungsbeispiels ist der optische Bildstabilisator 22 ausgebildet, um die optische Bildstabilisierung entlang einer der Bildrichtungen 28, 32 basierend auf einer Rotationsbewegung 38 der Strahlumlenkeinrichtung 18 bereitzustellen, wobei der funktionelle Zusammenhang eine Winkelfunktion ist, die einen Rotationswinkel der Strahlumlenkeinrichtung 18 auf einen Umfang der elektronischen Bildstabilisierung entlang der Bildrichtung 28, 32 abbildet.

Gemäß einem einundvierzigsten Ausführungsbeispiel unter Bezugnahme auf eines des dreiunddreißigsten bis vierzigsten Ausführungsbeispiels ist der elektronische Bildstabilisator 41 ausgebildet, in einem ersten Teilbild eines ersten Teilgesichtsfeldes 72a-b zu einem ersten Zeitpunkt und zu einem zweiten Zeitpunkt ein übereinstimmendes Merkmal zu identifizieren, und um die elektronische Bildstabilisierung basierend auf einem Vergleich von Bewegungen des Merkmals in dem ersten Abbild bereitzustellen.

Gemäß einem zweiundvierzigsten Ausführungsbeispiel unter Bezugnahme auf eines des sechzehnten bis einundvierzigsten Ausführungsbeispiels umfasst die Multiaperturabbildungsvorrichtung ferner eine Fokussiereinrichtung 87 umfassend zumindest einen Aktor 89a-b zum Einstellen eines Fokus der Vorrichtung, der ausgebildet ist, um eine Relativbewegung zwischen zumindest einer Optik 64a-c eines der optischen Kanäle 16a-c und dem Bildsensor 12 bereitzustellen.

Gemäß einem dreiundvierzigsten Ausführungsbeispiel unter Bezugnahme auf das zweiundvierzigste Ausführungsbeispiel ist die Fokussiereinrichtung 87 ausgebildet, um eine dritte Relativbewegung für den ersten und zweiten optischen Kanal 16a, 16c und eine vierte Relativbewegung für den dritten optischen Kanal 16b bereitzustellen.

Gemäß einem vierundvierzigsten Ausführungsbeispiel unter Bezugnahme auf eines des sechzehnten bis dreiundvierzigsten Ausführungsbeispiels sind die Bildsensorbereiche entlang einer Zeilenerstreckungsrichtung 35 auf dem Bildsensor 12 angeordnet, und wobei die Bildsensorbereiche 24a-c entlang einer Bildrichtung 32 senkrecht zu der Zeilenerstreckungsrichtung eine innerhalb eines Toleranzbereichs von 20 % gleiche Abmessung aufweisen.

Gemäß einem fünfundvierzigsten Ausführungsbeispiel unter Bezugnahme auf eines des sechzehnten bis vierundvierzigsten Ausführungsbeispiels sind der erste und der zweite optische Kanal 16a, 16c Teil einer Gruppe von optischen Kanälen, die ausgebildet sind, um jeweils ein Teilgesichtsfeld 72a-b des Gesamtgesichtsfeldes 70 abzubilden, wobei die Gruppe von optischen Kanälen ausgebildet ist, um gemeinsam das Gesamtgesichtsfeld 70 vollständig abzubilden.

Gemäß einem sechsundvierzigsten Ausführungsbeispiel unter Bezugnahme auf das vierundvierzigste Ausführungsbeispiel ist die Gruppe von optischen Kanälen zum Erfassen genau zweier Teilgesichtsfelder 72a-b ausgebildet.

Gemäß einem siebenundvierzigsten Ausführungsbeispiel unter Bezugnahme auf eines des sechzehnten bis sechsundvierzigsten Ausführungsbeispiels weisen ein erstes Teilbild und ein zweites Teilbild, welche die von dem Bildsensor 12 bereitgestellte Bildinformationen des ersten und zweiten Teilgesichtsfeldes 72a-b repräsentieren, entlang einer ersten Bildrichtung 32 eine gleiche Abmessung auf wie ein Gesamtbild, das eine von dem Bildsensor bereitgestellte Bildinformation des Gesamtgesichtsfeldes 70 repräsentiert, und weisen entlang einer zweiten Bildrichtung 28 eine unterschiedliche Abmessung verglichen mit dem Gesamtbild auf.

Gemäß einem achtundvierzigsten Ausführungsbeispiel unter Bezugnahme auf eines des sechzehnten bis siebenundvierzigsten Ausführungsbeispiels ist die Multiaperturabbildungsvorrichtung ausgebildet, um die abgebildeten ersten und zweiten Teilgesichtsfelder 72a-b mit einer farbeinheitlichen Luminanzinformation bereitzustellen.

Gemäß einem neunundvierzigsten Ausführungsbeispiel unter Bezugnahme auf eines des sechzehnten bis achtundvierzigsten Ausführungsbeispiels ist die Multiaperturabbildungsvorrichtung als Mobiltelefon, Smartphone, Tablet oder Monitor ausgebildet.

Gemäß einem fünfzigsten Ausführungsbeispiel weist ein Verfahren 1400 zum Bereitstellen einer Vorrichtung folgende Schritte auf: Bereitstellen 1410 eines Bildsensors; Anordnen 1420 eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, so dass ein erster optischer Kanal des Arrays ausgebildet ist, um ein erstes Teilgesichtsfeld des Gesamtgesichtsfeldes abzubilden und so dass ein zweiter optischer Kanal des Arrays ausgebildet ist, um ein zweites Teilgesichtsfeld des Gesamtgesichtsfeldes abzubilden; und Anordnen 1430 einer Berechnungseinheit, so dass diese ausgebildet ist, um Bildinformationen des ersten und zweiten Teilgesichtsfelds basierend auf den abgebildeten Teilgesichtsfeldern zu erhalten, und um eine Bildinformation des Gesamtgesichtsfeldes zu erhalten, und um die Bildinformationen der Teilgesichtsfelder mit der Bildinformation des Gesamtgesichtsfeldes zu kombinieren, um eine kombinierte Bildinformation des Gesamtgesichtsfeldes zu erzeugen.

Gemäß einem einundfünfzigsten Ausführungsbeispiel weist ein Verfahren 1500 zum Bereitstellen einer Multiaperturabbildungsvorrichtung folgende Schritte auf: Bereitstellen 1510 eines Bildsensors; und Anordnen 1520 eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, und so dass ein erster optischer Kanal des Arrays ausgebildet ist, um ein erstes Teilgesichtsfeld des Gesamtgesichtsfeldes abzubilden, so dass ein zweiter optischer Kanal des Arrays ausgebildet ist, um ein zweites Teilgesichtsfeld des Gesamtgesichtsfeldes abzubilden, und so dass ein dritter optischer Kanal ausgebildet ist, um das Gesamtgesichtsfeld vollständig abzubilden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Multiaperturabbildungsvorrichtung (10; 30; 60; 70; 80; 90) mit:
einem Bildsensor (12); und
einem Array (14) von optischen Kanälen (16a-c), wobei jeder optische Kanal (16a-c) eine Optik (64a-c) zur Abbildung zumindest eines Teilgesichtsfeldes (72a-b) eines Gesamtgesichtsfeldes (70) auf einen Bildsensorbereich (24a-c) des Bildsensors (12) umfasst;
wobei ein erster optischer Kanal (16a) des Arrays (14) ausgebildet ist, um ein erstes Teilgesichtsfeld (72a) des Gesamtgesichtsfeldes (70) abzubilden, wobei ein zweiter optischer Kanal (16b) des Arrays (14) ausgebildet ist, um ein zweites Teilgesichtsfeld (72b) des Gesamtgesichtsfeldes (70) abzubilden, und wobei ein dritter optischer Kanal (16c) ausgebildet ist, um das Gesamtgesichtsfeld (70) vollständig abzubilden.

2. Multiaperturabbildungsvorrichtung gemäß Anspruch 1, umfassend eine Strahlumlenkeinrichtung (18) zum gemeinsamen Umlenken eines Strahlengangs (26a-b) des ersten und zweiten optischen Kanals (16a-b).

3. Multiaperturabbildungsvorrichtung gemäß Anspruch 1 oder 2, bei der eine Anordnung von Optiken (64a, 64c) zur Erfassung des ersten und des zweiten Teilgesichtsfelds in dem Array (14) bezogen auf einen Ort der Optik (64b) zur Abbildung des Gesamtgesichtsfeldes (70) symmetrisch ist; oder
bei der eine Anordnung von Bildsensorbereichen (24a, 24c) zur Abbildung des ersten und zweiten Teilgesichtsfelds (72a-b) bezogen auf einen Ort des Bildsensorbereichs (24b) zur Abbildung des Gesamtgesichtsfeldes (70) symmetrisch ist.

4. Multiaperturabbildungsvorrichtung gemäß einem der Ansprüche 1 bis 3, bei der ein Bildformat des Gesamtgesichtsfeldes (70) einer redundanzfreien Kombination des abgebildeten ersten Teilgesichtsfeldes (72a) und des abgebildeten zweiten Teilgesichtsfeldes (72b) entspricht.

5. Multiaperturabbildungsvorrichtung gemäß einem der Ansprüche 1 bis 4, umfassend eines Berechnungseinheit (33), die ausgebildet ist, um Bildinformationen des ersten und zweiten Teilgesichtsfelds basierend auf den abgebildeten Teilgesichtsfeldern (72a-b) zu erhalten, und um eine Bildinformation des Gesamtgesichtsfeldes (70) basierend auf dem abgebildeten Gesamtgesichtsfeld (70) zu erhalten, und um die Bildinformationen der Teilgesichtsfelder mit der Bildinformation des Gesamtgesichtsfeldes (70) zu kombinieren, um eine kombinierte Bildinformation (61) des Gesamtgesichtsfeldes (70) zu erzeugen.

6. Multiaperturabbildungsvorrichtung gemäß einem der Ansprüche 1 bis 5, die ausgebildet ist, um eine Bildinformation des von dem dritten optischen Kanals erfassten Gesamtgesichtsfeldes (70) von dem Bildsensor mit einer ersten Bildauflösung zu erhalten, wobei die Multiaperturabbildungsvorrichtung eine Anzeigeeinrichtung umfasst und ausgebildet ist, um die Bildinformation mit höchstens der ersten Bildauflösung anzuzeigen.

7. Multiaperturabbildungsvorrichtung gemäß einem der Ansprüche 1 bis 6, die ferner eine Fokussiereinrichtung (87) umfassend zumindest einen Aktor (89a-b) zum Einstellen eines Fokus der Vorrichtung, der ausgebildet ist, um eine Relativbewegung zwischen zumindest einer Optik (64a-c) eines der optischen Kanäle (16a-c) und dem Bildsensor (12) bereitzustellen, umfasst.

8. Multiaperturabbildungsvorrichtung gemäß Anspruch 7, bei der die Fokussiereinrichtung (87) ausgebildet ist, um eine dritte Relativbewegung für den ersten und zweiten optischen Kanal (16a, 16c) und eine vierte Relativbewegung für den dritten optischen Kanal (16b) bereitzustellen.

9. Multiaperturabbildungsvorrichtung gemäß einem der Ansprüche 1 bis 8, bei der die Bildsensorbereiche entlang einer Zeilenerstreckungsrichtung (35) auf dem Bildsensor (12) angeordnet sind, und wobei die Bildsensorbereiche (24a-c) entlang einer Bildrichtung (32) senkrecht zu der Zeilenerstreckungsrichtung eine innerhalb eines Toleranzbereichs von 20 % gleiche Abmessung aufweisen.

10. Multiaperturabbildungsvorrichtung gemäß einem der Ansprüche 1 bis 9, bei der der erste und der zweite optische Kanal (16a, 16c) Teil einer Gruppe von optischen Kanälen sind, die ausgebildet sind, um jeweils ein Teilgesichtsfeld (72a-b) des Gesamtgesichtsfeldes (70) abzubilden, wobei die Gruppe von optischen Kanälen ausgebildet ist, um gemeinsam das Gesamtgesichtsfeld (70) vollständig abzubilden.

11. Multiaperturabbildungsvorrichtung gemäß Anspruch 10, bei der die Gruppe von optischen Kanälen zum Erfassen genau zweier Teilgesichtsfelder (72a-b) ausgebildet ist.

12. Multiaperturabbildungsvorrichtung gemäß einem der Ansprüche 1 bis 11, bei der ein erstes Teilbild und ein zweites Teilbild, welche die von dem Bildsensor (12) bereitgestellte Bildinformationen des ersten und zweiten Teilgesichtsfeldes (72a-b) repräsentieren, entlang einer ersten Bildrichtung (32) eine gleiche Abmessung aufweisen wie ein Gesamtbild, das eine von dem Bildsensor bereitgestellte Bildinformation des Gesamtgesichtsfeldes (70) repräsentiert, und entlang einer zweiten Bildrichtung (28) eine unterschiedliche Abmessung verglichen mit dem Gesamtbild aufweisen.

13. Multiaperturabbildungsvorrichtung gemäß einem der Ansprüche 1 bis 12, die ausgebildet ist, um die abgebildeten ersten und zweiten Teilgesichtsfelder (72a-b) mit einer farbeinheitlichen Luminanzinformation bereitzustellen.

14. Multiaperturabbildungsvorrichtung gemäß einem der Ansprüche 1 bis 13, die als Mobiltelefon, Smartphone, Tablet oder Monitor ausgebildet ist.

15. Verfahren (1500) zum Bereitstellen einer Multiaperturabbildungsvorrichtung mit folgenden Schritten:
Bereitstellen (1510) eines Bildsensors; und
Anordnen (1520) eines Arrays von optischen Kanälen, so dass jeder optische Kanal eine Optik zur Abbildung zumindest eines Teilgesichtsfeldes eines Gesamtgesichtsfeldes auf einen Bildsensorbereich des Bildsensors umfasst, und so dass ein erster optischer Kanal des Arrays ausgebildet ist, um ein erstes Teilgesichtsfeld des Gesamtgesichtsfeldes abzubilden, so dass ein zweiter optischer Kanal des Arrays ausgebildet ist, um ein zweites Teilgesichtsfeld des Gesamtgesichtsfeldes abzubilden, und so dass ein dritter optischer Kanal ausgebildet ist, um das Gesamtgesichtsfeld vollständig abzubilden.
